# EUROPÄISCHE PATENTSCHRIFT

(11) **EP 3 983 674 B1**
(45) Veröffentlichungstag und Bekanntmachung des Hinweises auf die Patenterteilung: **20.09.2023**
(21) Anmeldenummer: 20732153.0
(22) Anmeldetag: 04.06.2020
(51) Int. Cl.: F03D 17/00, F03D 7/04, F03D 9/25

(54) **VERFAHREN ZUM ERFASSEN EINER WINDGESCHWINDIGKEIT, VERFAHREN ZUM STEUERN EINER WINDENERGIEANLAGE, VERFAHREN ZUM STEUERN EINES WINDPARKS; UND WINDENERGIEANLAGE**
A METHOD FOR DETECTING A WIND SPEED, A METHOD FOR CONTROLLING A WIND TURBINE, A METHOD FOR CONTROLLING A WIND FARM, AND A WIND TURBINE
PROCÉDÉ PERMETTANT DE DÉTECTER LA VITESSE DU VENT, PROCÉDÉ PERMETTANT DE COMMANDER UNE ÉOLIENNE, PROCÉDÉ PERMETTANT DE COMMANDER UN PARC ÉOLIEN; ET ÉOLIENNE

(30) Priorität: 13.06.2019 DE 102019116050
(43) Veröffentlichungstag der Anmeldung: 20.04.2022
(73) Patentinhaber: Wobben Properties GmbH, 26607 Aurich (DE)
(72) Erfinder: STOLTENJOHANNES, Jürgen, 26605 Aurich (DE); GESCHE, Timo, 26624 Südbrookmerland (DE)
(74) Vertreter: Eisenführ Speiser
(86) Internationale Anmeldenummer: PCT/EP2020/065500
(87) Internationale Veröffentlichungsnummer: WO 2020/249463

(56) Entgegenhaltungen:
- EP-A2- 2 460 034
- DE-A1- 10 219 062
- DE-B3-102015 103 757

## Beschreibung

Die vorliegende Erfindung betrifft ein Verfahren zum Erfassen wenigstens einer Windzustandsgröße, insbesondere einer Windgeschwindigkeit, mittels einer Windenergieanlage. Die vorliegende Erfindung betrifft außerdem eine Windenergieanlage und die vorliegende Erfindung betrifft auch einen mehrere Windenergieanlagen aufweisenden Windpark.

Windenergieanlagen erzeugen elektrische Leistung aus Wind. Besonders die Kenntnis der vorherrschenden Windgeschwindigkeit, die somit eine Windzustandsgröße ist, kann daher von großer Bedeutung zum Steuern der Windenergieanlage sein. Weitere relevante Windzustandsgrößen, die somit von Interesse sein können, können die Windrichtung und Turbulenzen sein. Auch Änderungen der Windgeschwindigkeit und/oder Windrichtung können von Bedeutung sein. Besonders die Veränderung der Windgeschwindigkeit und/oder Windrichtung mit dem Ort, insbesondere mit ihrer Höhe, kann Einfluss auf den Betrieb und damit die Steuerung der Windenergieanlage haben.

Grundsätzlich und klassisch ist zur Erfassung der Windgeschwindigkeit und Windrichtung ein sog. Gondelanemometer mit Windfahne vorgesehen. Eine solche Messeinrichtung ist etabliert und vergleichsweise kostengünstig. Sie kann allerdings nur dort, wo sie installiert ist, die Windgeschwindigkeit und Windrichtung messen. Üblicherweise ist sie auf der Gondel der Windenergieanlage installiert und kann somit im Wesentlichen die Windgeschwindigkeit in der Mitte des Rotorfeldes erfassen. Das Rotorfeld ist diejenige Fläche, die im Betrieb der Windenergieanlage von den Rotorblättern des aerodynamischen Rotors überstrichen wird.

Für einige Anwendungen kann eine solche Erfassung der Windgeschwindigkeit und Windrichtung ausreichend sein. Allerdings ist ein solches Gondelanemometer mit Windfahne vergleichsweise ungenau und wird insbesondere auch durch die Drehung des Rotors gestört, denn aus Windrichtung gesehen ist ein solches Gondelanemometer mit Windfahne regelmäßig hinter dem Rotor angeordnet, also in Lee des aerodynamischen Rotors.

Viele herkömmliche Regelungen einer Windenergieanlage benötigen oftmals die Kenntnis der Windgeschwindigkeit nicht und leiten vielmehr ihren Betrieb von leichter erfassbaren Betriebsgrößen ab. So kann eine Windenergieanlage bspw. mittels einer Drehzahl-Leistungs-Kennlinie betrieben werden. Diese Kennlinie gibt einen Zusammenhang zwischen Drehzahl des Rotors und von der Windenergieanlage bzw. ihrem Generator erzeugbare Leistung an. Dadurch kann die Betriebsweise der Windenergieanlage vorgegeben werden, in dem die Windenergieanlage so gesteuert wird, dass eine Drehzahl erfasst und abhängig davon gemäß der Drehzahl-Leistungs-Kennlinie die zugehörige Leistung eingestellt wird.

Mit zunehmender Größe von Windenergieanlage können aber örtliche Verteilungen der Windgeschwindigkeit über die Rotorfläche so wichtig werden, dass die Berücksichtigung einer einzelnen Windgeschwindigkeit nicht ausreichend sein kann. Es können dann komplexere Messsysteme eingesetzt werden, wie bspw. ein auf LIDAR (Abkürzung für Englisch Light Detecting and Ranging) basierendes System. Mit einem solchen LIDAR-System kann bei entsprechender Ausrichtung des LIDAR auf einen Bereich vor der Rotorfläche entsprechend dort die Windgeschwindigkeit einschließlich Richtung erfasst werden.

Problematisch daran ist, dass selbst im Bereich vor dem Rotor die Windgeschwindigkeit bereits durch den Rotor beeinflusst wird. Eine unverfälschte Messung ist daher kaum noch möglich.

Ebenfalls ist es möglich, auf dem LIDAR-System basierende Messanordnungen bodenbasiert aufzustellen, also nicht an der Windenergieanlage zu installieren, sondern bspw. in einem Bereich vor der Windenergieanlage. Solche Verfahren können allerdings aufwendig werden und sie haben besonders den Nachteil, dass solche bodenbasierten LIDAR -Systeme einer Windrichtungsänderung nicht automatisch folgen. Entsprechend müssen solche bodenbasierte LIDAR -Systeme einer Windrichtungsänderung aufwendig nachgeführt werden, oder es müssten mehrere solcher bodenbasierter LIDAR -Systeme um die Windenergieanlage herum angeordnet werden, um für jede Windrichtung wenigstens einen Sensor in einer geeigneten Position zu haben. Entsprechend ist ein solches System aufwendig und kann dennoch nicht oder allenfalls teilweise das Problem berücksichtigen, dass der Rotor der Windenergieanlage die Windgeschwindigkeit vor dem Rotor, also vor dem Rotorfeld, stark beeinflusst.

Das deutsche Patent DE 10 2015 103 757 B3 betrifft eine Windmessboje. Diese Windmessboje kann auf dem Meer ausgebracht und verankert werden, wobei ein zur Messung relevanter Bereich über die Wasseroberfläche hinausragt.

Die deutsche Offenlegungsschrift DE 102 19 062 A1 betrifft eine schwimmende Windenergieanlage.

Das Deutsche Patent- und Markenamt hat in der Prioritätsanmeldung zu vorliegender Anmeldung folgenden Stand der Technik recherchiert: DE 10 2005 045 516 A1 und US 2018/0017039 A1.

Der vorliegenden Erfindung liegt somit die Aufgabe zugrunde, zumindest eines der o.g. Probleme zu adressieren. Insbesondere soll eine Lösung vorgeschlagen werden, bei der auf einfache Art und Weise wenigstens eine für die Windenergieanlage relevante Windzustandsgröße, insbesondere eine Windgeschwindigkeit oder eine Windgeschwindigkeitsverteilung erfasst wird, die nicht oder möglichst wenig dem Einfluss des Rotors der Windenergieanlage auf die zu erfassende Windzustandsgröße unterliegt. Zumindest soll zu bisher bekannten Lösungen eine alternative Lösung vorgeschlagen werden.

Erfindungsgemäß wird ein Verfahren gemäß Anspruch 1 vorgeschlagen. Dieses Verfahren ist ausgebildet zum Erfassen wenigstens einer Windzustandsgröße mittels einer Windenergieanlage. Eine solche Windzustandsgröße kann besonders jeweils eine Windgeschwindigkeit, eine Windrichtung und eine Turbulenzeigenschaft des Windes sein. Es können auch diese oder einige dieser Windzustandsgrößen zugleich bzw. parallel aufgenommen werden. Außerdem oder alternativ können jeweils mehrere solcher Windzustandsgrößen über den Ort, besonders über die Höhe verteilt aufgenommen werden, also bspw. unterschiedliche Windgeschwindigkeiten in unterschiedlichen Höhen.

Es wird von einer Windenergieanlage ausgegangen, die einen Rotor mit mehreren Rotorblättern aufweist. Ein solcher Rotor kann in Abgrenzung zum Läufer eines Generators auch als aerodynamischer Rotor bezeichnet werden. Theoretisch kommt auch in Betracht, dass der Rotor nur ein Rotorblatt aufweist, was heutzutage allerdings unüblich ist. Insbesondere ist ein Rotor mit drei Rotorblättern vorgesehen. Die Rotorblätter überstreichen dann bei Drehung des Rotors eine Rotorfläche. Dadurch definiert sich also diese Rotorfläche.

Für das Verfahren ist dann vorgesehen, dass in einem Schritt wenigstens ein Windmesswert in einem Windmessbereich erfasst wird. Der Windmessbereich gibt einen örtlichen Bereich an und es ist vorgesehen, dass der Windmessbereich als ein Bereich oberhalb einer Rotorfläche festgelegt ist. Das Erfassen des wenigstens eines Windmesswertes ist somit von einer Gondel der Windenergieanlage aus gesehen nach oben gerichtet und zwar in einen Bereich, der noch oberhalb der Rotorfläche liegt.

Bspw. kann eine moderne Windenergieanlage eine Nabenhöhe von 135 Metern aufweisen, bei einem Rotordurchmesser von 130 Metern. Bei diesem Beispiel befindet sich dann die Blattspitze eines senkrecht nach oben weisenden Rotorblatts in einer Höhe von 200 Metern. Das markiert auch das oberste Ende der Rotorfläche. Somit wird vorgeschlagen, dass der Windmessbereich in einem Bereich oberhalb dieser 200 Meter festgelegt ist. Bspw. kann er von einer Höhe von etwa 220 Metern bis 350 Metern reichen, um nur ein Beispiel zu nennen. Jedenfalls wird vorgeschlagen, dass der Windmessbereich hier oberhalb der beispielhaft genannten 200 Meter liegt.

Der Windmessbereich wird auch deshalb als Windmessbereich bezeichnet, weil hier der Wind gemessen bzw. vermessen wird. Dennoch wird vorzugsweise von Erfassen wenigstens eines Windmesswertes, wie bspw. der Windgeschwindigkeit und/oder der Windrichtung gesprochen, weil moderne physikalische Messsysteme üblicherweise die tatsächliche Messgröße aus anderen physikalischen Größen ableiten.

In den Augen eines Fachmanns kann das Erfassen wenigstens eines Windmesswertes auch als Messen wenigstens eines Windmesswertes bezeichnet werden.

Als ein Schritt ist dann vorgesehen, wenigstens eine Windzustandsgröße in einem Rotorluvbereich in Abhängigkeit des wenigstens einen erfassten Windmesswertes zu bestimmen. Ein solcher Rotorluvbereich ist somit bezogen auf die Windrichtung vor der Rotorfläche.

Der Rotorluvbereich ist damit auch unterhalb des Windmessbereichs. Und insoweit wird vorgeschlagen, dass diese wenigstens eine Windzustandsgröße in dem Rotorluvbereich aus dem wenigstens einen Windmesswert, der in dem höher gelegenen Windmessbereich aufgenommen wurde, herausgerechnet wird. Das kann bspw. so erfolgen, dass aus dem erfassten Windmesswert, der bspw. eine Windgeschwindigkeit darstellt und in vergleichsweiser hoher Höhe erfasst wurde, auf einen verringerten Wert der Windzustandsgröße im Rotorluvbereich geschlossen wird, wenn bspw. aus Erfahrungswerten, also vorab aufgenommenen Zusammenhängen, eine Windgeschwindigkeitsabnahme mit einem bekannten Gradienten antizipiert wird.

Es kommen aber auch komplexere Varianten in Betracht. Bspw. kann in dem Windmessbereich ein Höhenprofil der Windmesswerte aufgenommen werden und von diesem Höhenprofil in dem Windmessbereich kann weiter auf ein Höhenprofil im Rotorluvbereich geschlossen werden und somit auf ein Höhenprofil der zugeordneten Windzustandsgröße im Rotorluvbereich.

Durch die Messung in dem Windmessbereich oberhalb der Rotorfläche wird somit eine Messung in einem durch die Windenergieanlage im Wesentlichen ungestörten Bereich vorgenommen. Dadurch ist es möglich, eine im Wesentlichen unverfälschte Windgeschwindigkeit jedenfalls in dem Bereich zu erfassen. Gleiches gilt natürlich auch für andere Windmesswerte. Besonders wurde auch erkannt, dass heutzutage die meisten Windenergieanlagen in Windparks aufgestellt sind. In solchen Windparks beeinflussen sich die Windenergieanlagen gegenseitig. Dadurch gibt es auch in größerer Entfernung, also bspw. 50 Meter oder 100 Meter oder 200 Meter vor einer Rotorfläche selten einen ungestörten Bereich. Praktisch keine Windenergieanlage hat einen solchen ungestörten Bereich bei jeder Windrichtung. Dabei wurde besonders erkannt, dass es vorteilhaft sein kann, zunächst von einer ungestörten Windmessung auszugehen, selbst wenn letztlich die Windenergieanlage faktisch von einer gestörten Windgeschwindigkeit bzw. einem gestörten Windfeld erreicht wird.

Hier liegt besonders die Erkenntnis zugrunde, dass auch Windvorhersagen besser auf ungestörten Windwerten basierend erstellt werden können. Etwaige Einflüsse durch benachbarte Windenergieanlagen und/oder die Windenergieanlage selbst, können letztlich durch Kenntnis der Gegebenheiten, also besonders Kenntnis des Verhaltens der Windenergieanlage bzw. der anderen Windenergieanlagen im Windpark berücksichtigt werden. Liegt aber schon eine verfälschte Windmessung zugrunde, liegt somit schon eine ungünstige Ausgangslage zugrunde.

Es kommt hinzu, dass letztlich auch eine Messung ungestörter Windgeschwindigkeiten eine höhere Genauigkeit zulässt. Auch für das Erfassen eines Windfeldes in einem Windpark, wenn nämlich die vorgeschlagene Erfassung wenigstens einer Windzustandsgröße nicht nur mit einer Windenergieanlage an einem Ort in dem Windpark durchgeführt wird, sondern mit mehreren Windenergieanlagen an mehreren Orten im Windpark, kann aus einer unverfälschten Messung besser ein Gesamtbild für den Windpark erstellt werden.

Zwar können sich Genauigkeitseinbußen durch das Herunterrechnen von dem oberhalb der Rotorfläche angeordneten Windmessbereich in den Bereich darunter, nämlich in den Rotorluvbereich, ergeben, bei einer guten Ausgangslage, also einer Messung eines unverfälschten Windfeldes, können solche Herunterrechnungen aber mit guter Genauigkeit durchgeführt werden. Ggf. und/oder gelegentlich können auch, was als eine Ausführungsform vorgeschlagen wird, Referenzmessungen durchgeführt werden, um die wenigstens eine bestimmte Windzustandsgröße in dem Rotorluvbereich zu überprüfen.

Gemäß einer Ausgestaltung wird vorgeschlagen, dass zum Erfassen des wenigstens einen Windmesswertes eine Windmesseinrichtung auf der Windenergieanlage angeordnet ist, insbesondere auf einer Gondel der Windenergieanlage. Insbesondere ist die Windmesseinrichtung dazu eingerichtet, unabhängig von einer Azimutverdrehung der Windenergieanlage eine ortsfeste Windmessung auszuführen. Die Windmesseinrichtung ist somit dazu vorbereitet, in dem Windmessbereich oberhalb der Rotorfläche und damit auch oberhalb der Gondel der Windenergieanlage den wenigstens einen Windmesswert zu erfassen. Durch die Anordnung auf der Windenergieanlage insbesondere auf der Gondel der Windenergieanlage kann somit die Windmesseinrichtung von dort aus nach oben gerichtet sein und die Messung durchführen. Sie kann von der Windenergieanlage, besonders von der Gondel der Windenergieanlage aus angesteuert werden und ist durch die Höhe der Windenergieanlage, also insbesondere die Höhenposition der Gondel der Windenergieanlage entsprechend näher an dem Windmessbereich angeordnet.

Eine bevorzugte Ausführungsform ist dabei, dass die Windmesseinrichtung im Grunde senkrecht nach oben weist um den wenigstens einen Windmesswert in dem Windmessbereich zu erfassen. Dann ändert sich die Ausrichtung dieser Windmesseinrichtung auch nicht dadurch, dass die Windenergieanlage und damit auch die Gondel in ihrer Azimutausrichtung verstellt wird. Insoweit kann sie eine ortsfeste Windmessung ausführen. Die Windmessung wird also immer an demselben Ort ausgeführt.

Vorzugsweise wird somit vorgeschlagen, dass zum Erfassen des Windmesswertes eine im Wesentlichen vertikal nach oben gerichtete Windmessung ausgeführt wird. Das kann beinhalten, dass eine solche nach oben gerichtete Windmessung im Sinne eines sich nach oben öffnenden Kegels nach oben gerichtet ist. Die Kegelachse ist dann vertikal nach oben gerichtet. Grundsätzlich kommt hier natürlich auch in Betracht, dass ein solcher Messkegel ein wenig geneigt ist. Vorzugsweise ist er aber nicht geneigt und öffnet sich besonders so, dass er nicht die Rotorfläche berührt.

Vorzugsweise wird zur Bestimmung der Windrichtung eine Azimutausrichtung der Windenergieanlage, also eine Azimutausrichtung der Gondel mit berücksichtig, also aufgenommen. Aus der Azimutposition der Windenergieanlage bzw. Gondel lässt sich die Ausrichtung der Messeinrichtung ableiten. Damit kann die von der senkrecht nach oben weisenden Windmesseinrichtung aufgenommene Windrichtung einer absoluten Richtung zugeordnet werden.

Gemäß einer Ausführungsform wird vorgeschlagen, dass das Erfassen des Windmesswertes mit einer laserbasierten Windmessung ausgeführt wird, insbesondere mit einer auf dem LIDAR -Verfahren basierenden Windmesseinrichtung und/oder mit einer einen kegelförmigen Messbereich aufweisenden Windmesseinrichtung. Ein solches LIDAR-Verfahren ist grundsätzlich bekannt. Zur Messung wird ein Lasersignal, umgangssprachlich gesprochen also ein Laserstrahl, ausgesendet und die Reflektionen ausgewertet. Die Auswertung der Reflektionen ist auch möglich, wenn das Lasersignal im Wesentlichen vertikal zu der zu erfassenden Windrichtung ausgesendet wird. Genau das wurde als vorteilhaft erkannt und kann hier zur Anwendung kommen.

Die laserbasierte Windmessung sendet also das Lasersignal im Wesentlichen senkrecht nach oben aus, insbesondere ist die Messeinrichtung dazu auf der Gondel angeordnet. Das Lasersignal kann dazu entlang des bereits beschriebenen kegelförmigen Messbereichs bewegt werden. Das Lasersignal beschreibt dann im Grunde einen Kegelmantel, der senkrecht mit seiner Spitze quasi auf der Messeinrichtung steht. Dieser Messkegel bzw. kegelförmige Messbereich reicht somit in den Windmessbereich hinein und kann dort die Windmesswerte, zumindest einen davon, aufnehmen.

Insoweit kann auch eine grundsätzlich bekannte LIDAR-Messeinrichtung verwendet werden, die aber zu einer neuen Anwendung kommt und ggf. auf die vorgeschlagene Lösung angepasst wird. Damit kann dann oberhalb der Rotorfläche, nämlich in dem Windmessbereich, ein Windfeld erfasst werden. Dieses Windmessfeld wird dann verwendet, um ein Windfeld im Rotorluvbereich zu bestimmen. Im einfachsten Fall kann das so erfolgen, dass ein Höhenprofil, das als Windfeld erfasst wurde oder als Teil des Windfeldes erfasst wurde, gemäß einer erfassten Regelmäßigkeit in ein Windprofil im Bereich des Rotorluvbereichs umgerechnet wird. Die Regelmäßigkeit kann, z.B. ein prozentualer Anstieg der Windgeschwindigkeiten t der Höhe, bzw. entsprechender Abfall mit abnehmender Höhe sein.

Insoweit kann ein solches umgerechnetes Windfeld im Rotorluvbereich als eine fiktive Größe angesehen werden, die bspw. durch den Rotor beeinflusst und damit verändert werden kann. Gleichwohl bildet ein solches Windfeld eine gute Eingangsgröße für die Regelung der Windenergieanlage. Besonders kann sie eine gute Eingangsgröße für ein Windenergieanlagenmodell bilden. Sie kann dabei auch eine gute Eingangsgröße bilden, um Belastungen des Rotors der Windenergieanlage abschätzen zu können.

Gemäß einer Ausführungsform wird vorgeschlagen, dass die wenigstens eine Windzustandsgröße eine Windzustandsgröße ist aus der Liste aufweisend:
- eine Windgeschwindigkeit,
- eine Windrichtung,
- eine Turbulenz-Intensität,
- eine Windscherung, insbesondere ein Wind-Shear und/oder ein Wind-Veer, und
- eine Winddrehung.

Die Windgeschwindigkeit kann als wesentliche Eingangsgröße für eine Windenergieanlage betrachtet werden. Entsprechend ist ihre Kenntnis besonders hilfreich für die Steuerung der Windenergieanlage. Eine solche Steuerung kann besonders das Verändern von Blattwinkeln und auch das Einstellen einer Abgabeleistung unter Berücksichtigung der Windgeschwindigkeit durchführen.

Eine Windrichtung ist besonders von Bedeutung für eine Azimuteinstellung der Windenergieanlage. Eine Windrichtung gibt aber auch Aufschluss über zu erwartende Wake-Effekte. Solche Wake-Effekte beschreiben die Situation, dass eine Windenergieanlage in Lee einer weiteren Windenergieanlage steht. Eine solche Situation ist unerwünscht und kann ggf. eine regelungstechnische Berücksichtigung erforderlich machen. Diese regelungstechnische Berücksichtigung kann sowohl an dieser in Lee stehenden Windenergieanlage als auch an der in Luv stehenden Windenergieanlagen durchgeführt werden. Schon geringe Veränderungen der Windrichtung können einen solchen Wake-Effekt stark verändern oder sogar beenden.

Eine Turbulenz-Intensität sagt besonders aus, wie stark der Wind in seiner Windgeschwindigkeit schwankt und/oder in seiner Windrichtung schwankt. Bei starken Schwankungen, also bei einer hohen Turbulenz-Intensität kann eine starke Anlagenbelastung die Folge sein und um eine solche Belastung zu verringern kann die Windenergieanlage entsprechend gesteuert werden. Eine Steuerungsmöglichkeit in diesem Sinne wäre, die Blattwinkel so zu verstellen, dass die Rotorblätter eine geringere Angriffsfläche bieten. Es mag zwar sein, dass sich dadurch die Möglichkeit der Leistungserzeugung verringert, zum Schutz der Windenergieanlage kann das aber ein hinnehmbarer Nachteil sein.

Eine Windscherung beschreibt den Effekt, dass sich die Windgeschwindigkeit mit dem Ort ändert, insbesondere nämlich mit der Höhe. Es kommen aber auch Änderungen in horizontaler Richtung in Betracht. Eine Veränderung der Windgeschwindigkeit mit dem Ort wird als Fachbegriff auch als Wind-Shear bezeichnet.

Der üblichste Fall dürfte sein, dass die Windgeschwindigkeit mit zunehmender Höhe zu nimmt. Das wäre eine Variante eines Wind-Shear. Außerdem oder alternativ kann, um ein weiteres Beispiel zu nennen, sich auch die Windrichtung mit der Höhe ändern. Das wäre dann ein Beispiel für ein Wind-Veer. Solche Phänomene können auch eine starke Belastung für den Rotor der Windenergieanlage darstellen und eine frühe und/oder genaue Erkennung ist daher vorteilhaft.

Als Winddrehung wird besonders bezeichnet, dass sich die Windrichtung mit der Zeit verändert. Das kann besonders bei einer schnellen Änderung zu einer Belastung der Windenergieanlage, besonders des Rotors führen. Besonders kritisch ist, wenn sich die Windrichtung derart stark ändert und derart schnell ändert, dass der Rotor plötzlich nicht mehr von vorne, sondern von der Seite angeströmt wird. Da ist es auch vorteilhaft, die Winddrehung als Windzustandsgröße zu erfassen.

Es wurde erkannt, dass eine Regelung, die eine oder mehrere dieser Windzustandsgrö-ßen berücksichtigt, dadurch Lasten, Leistung und/oder Schall optimieren kann, also Lasten und Schall minimieren, und Leistung maximieren.

Gemäß einer Ausführungsform wird vorgeschlagen, dass mehrere örtlich in dem Windmessbereich verteilte Windmesswerte erfasst werden und daraus mehrere örtlich in dem Rotorluvbereich verteilte Windzustandsgrößen bestimmt werden, um daraus ein Windfeld im Rotorluvbereich zu bestimmen. Hier liegt die Erkenntnis zugrunde, dass örtlich im Windmessbereich verteilt, also dort an mehreren Positionen, Windmesswerte aufgenommen werden können.

So können bspw. in unterschiedlichen Höhen im Windmessbereich Windmesswerte aufgenommen werden und außerdem auch in unterschiedlichen horizontalen Positionen innerhalb des Windmessbereichs Windmesswerte aufgenommen werden können. Aus solchen örtlich verteilt aufgenommenen Windmesswerten ist dann ebenfalls eine Rekonstruktion von Windzustandsgrößen möglich, die in dem Rotorluvbereich örtlich verteilt sind, also an unterschiedlichen Positionen. Auch hier kann eine Rekonstruktion solcher verteilter Windzustandsgrößen, also das Bestimmen solcher verteilter Windzustandsgrö-ßen, für unterschiedliche Positionen erfolgen. Solche unterschiedlichen Positionen können ebenfalls sowohl in vertikaler als auch horizontaler Richtung voneinander abweichen.

Die örtliche Verteilung in dem Rotorluvbereich kann also in vertikaler Richtung als auch in horizontaler Richtung vorgesehen sein. Besonders durch die Bestimmung mehrerer Windzustandsgrößen, die im Rotorluvbereich in vertikaler und auch horizontaler Richtung verteilt sind, ergibt sich somit ein zweidimensionales Feld, das durch diese verteilten Zustandsgrößen gekennzeichnet ist. Ein solches Feld kann als Windfeld bezeichnet werden. Ein solches Windfeld gibt somit eine Verteilung der Windzustandsgrößen über den entsprechenden Bereich an. Insbesondere kann hierbei die Windgeschwindigkeit und/oder die Windrichtung über diesen Bereich verteilt als Windfeld vorgesehen sein.

Gemäß einer Ausführungsform wird vorgeschlagen, dass in Abhängigkeit des wenigstens einen Windmesswertes und/oder in Abhängigkeit der wenigstens einen Windzustandsgröße ortsabhängige Wetterphänomene erfasst werden. Insbesondere wird das Auftreten eines Low-Level-Jets erfasst. Davon abhängig wird dann die Steuerung angepasst. Besonders geht es hier um lokale Wetterphänomene, die die Windenergieanlage belasten können. Das Anpassen der Steuerung erfolgt vorzugsweise so, dass die Windenergieanlage zu ihrem Schutz abgeregelt wird. Die Windenergieanlage kann dafür ihre Rotorblätter verstellen, nämlich in den Wind drehen, zumindest teilweise, um eine geringere Angriffsfläche für den Wind zu bieten. Außerdem oder alternativ kann die Drehzahl reduziert werden, um auch dadurch eine Belastung der Windenergieanlage zu reduzieren.

Es wurde besonders erkannt, dass durch die vorteilhafte Winderfassung, besonders durch das Erfassen der Windmesswerte in einem Windmessbereich oberhalb der Rotorfläche lokale Wetterphänomene, besonders lokale Windphänomene, erfasst werden können, die noch nicht die Höhe der Windenergieanlage erreicht haben, sich aber auf die Höhe der Windenergieanlage absenken.

Ein solches lokales Wetterphänomen ist ein sog. Low-Level-Jet. Ein solcher Low-Level-Jet tritt, gemessen an einem meteorologischen Maßstab, in sehr geringer Höhe auf und kann somit in Höhen von Windenergieanlagen und kurz darüber auftreten, also bspw. in Höhen von 100 bis 500 Metern. Es wurde erkannt, dass solche Low-Level-Jets, die bspw. in einer Höhe von 500 Metern auftreten oder erfasst wurden, sich häufig absenken und dann Höhen erreichen, in denen die Rotorfläche einer Windenergieanlage anzutreffen ist, also Höhen von 50 bis 200 Metern. Wird also ein solcher Low-Level-Jet in einer Höhe von 400 Metern erkannt, um ein Beispiel zu nennen, kann daraus ggf. abgeleitet werden, dass sich dieser absenkt und dann in Kürze zu einer Belastung wenigstens einer Windenergieanlage in dem betrachteten Windpark führen kann.

Insoweit ist die Berücksichtigung solcher lokaler Wetterphänomene besonders bei einer Steuerung eines Windparks sinnvoll und/oder wenn zumindest Windenergieanlagen in einem Windpark solche Informationen von anderen Windenergieanlagen erhalten. Besonders kann es vorkommen, dass an einer ersten Windenergieanlage ein solcher Low-Level-Jet erkannt wird, der dort aber noch in einer zunächst nicht relevanten Höhe auftritt. Zu nachfolgenden Windenergieanlagen kann sich dieser Low-Level-Jet dann absenken und daher ist es für solche nachgelagerten Windenergieanlagen hilfreich, wenn diese von entsprechend vorgelagerten Windenergieanalgen Informationen über solche sich absenkende Low-Level-Jets erhalten. Solche nachgelagerten Windenergieanlagen können dann zum Eigenschutz ihre Steuerung wie beschrieben anpassen.

Vorzugsweise wird in Abhängigkeit des wenigstens einen Windmesswertes und/oder in Abhängigkeit der wenigstens einen Windzustandsgröße eine lokale Windbelastung prognostiziert und abhängig dieser prognostizierten lokalen Windbelastung die Steuerung zum Schutz der Windenergieanlage angepasst. Der Gedanke ist hier ganz ähnlich wie bei der bereits beschriebenen Erfassung lokaler Wetterphänomene. Bei der vorgeschlagenen Prognostizierung lokaler Windbelastungen wird besonders vorgeschlagen, aus den Windmesswerten bzw. den Windzustandsgrößen ein möglichst umfangreiches Windfeld zu erfassen und/oder eine Veränderung der Windsituation zu erfassen. Davon abhängig kann dann eine Prognose der Windbedingungen und damit der lokalen Windbelastung abgeleitet werden. Auch dieses Verfahren ist besonders vorteilhaft im Zusammenhang mit einem Windpark und/oder der Steuerung eines Windparks anzuwenden.

Gemäß einer Ausführungsform wird vorgeschlagen, dass in Abhängigkeit des wenigstens einen Windmesswertes und/oder in Abhängigkeit der wenigstens einen Windzustandsgröße eine Regelleistung bereitgestellt wird. Das kann besonders bedeuten, dass die Windmesswerte bzw. Windzustandsgrößen eine Basis bilden, um eine solche Regelleistung der Höhe nach zu berechnen. Wird bspw. von einem Netzbetreiber eine Regelleistung von 10 % gefordert, demnach die Windenergieanlage also 10 % weniger Leistung einspeisen soll als sie könnte, so kann gemäß dieser Ausführungsform die Leistung berechnet werden, die die Windenergieanlage gerade einspeisen könnte und davon abhängig dann berechnet werden, wieviel Leistung eingespeist werden sollte, damit sich eine entsprechende Leistungsdifferenz einstellt, die als Regelleistung bereitgestellt werden kann.

Das dient entsprechend dazu, ein elektrisches Versorgungsnetz, in das die Windenergieanlage einspeist, stützen zu können. Das Versorgungsnetz wird also demnach nicht unmittelbar gestützt, aber in einem Bedarfsfall, bei dem die eingespeiste Leistung plötzlich erhöht werden muss, kann die eingespeiste Leistung um die Regelleistung oder einen Teil davon erhöht werden. Dabei wurde besonders auch erkannt, dass Windenergieanlagen im Vergleich zu den meisten anderen Netzeinspeisen, insbesondere im Vergleich zu konventionellen Netzeinspeisern, eine sehr schnelle Regelungsfähigkeit haben und eine solche Regelleistung in wenigen Sekunden bereitstellen können.

Gemäß einer Ausführungsform wird vorgeschlagen, dass in Abhängigkeit des wenigstens einen Windmesswertes und/oder in Abhängigkeit der wenigstens einen Windzustandsgröße eine Ertragsprognose durchgeführt wird, oder eine Ertragsprognose verbessert wird. Insbesondere wird vorgeschlagen, dass von einer Ertragsprognose ausgegangen wird, die abhängig einer Wettervorhersage erstellt wurde, und die dann abhängig des wenigstens einen Windmesswertes und/oder abhängig der wenigstens einen Windzustandsgröße verbessert wird.

Hier liegt der Gedanke zugrunde, dass basierend auf einer Wettervorhersage eine recht gute Ertragsprognose, also die Prognose, wieviel Leistung in naher Zukunft erzeugt werden kann, erstellt werden kann. Eine solche Ertragsprognose kann bspw. für zukünftige 15 Minuten bis zukünftige 4 Stunden, oder länger erstellt werden. Eine Wettervorhersage betrifft aber üblicherweise einen größeren Bereich als den eines Windparks und das kann sich in entsprechend geringen Genauigkeiten der Wettervorhersage und damit der resultierenden Ertragsprognose wiederspiegeln.

Basierend auf dem wenigstens einen Windmesswert und/oder der wenigstens einen Windzustandsgröße kann aber lokal, also für die betreffende Windenergieanlage und ggf. für den betreffenden Windpark, eine Abweichung von der Wettervorhersage erkannt werden. Darauf basierend kann die Ertragsprognose angepasst werden. Eine solche Anpassung kann auch bedeuten, dass für die Windenergieanlage bzw. den Windpark grundsätzlich abhängig des wenigstens einen Windmesswertes und/oder abhängig der wenigstens einen Windzustandsgröße erkannt wurde, dass die Windgeschwindigkeit in dem Windpark immer etwas höher oder etwas niedriger ist, als die Wettervorhersage für die betreffende Region angibt. Davon abhängig kann dann ein entsprechender Korrekturwert ermittelt und angewendet werden. Möglicherweise wird auch erkannt, dass solche Abweichungen abhängig der Windrichtung und/oder auch abhängig der Windgeschwindigkeit sind, um ein Beispiel zu nennen.

Auch diese Durchführung oder Verbesserung einer Ertragsprognose wird besonders im Zusammenhang eines Windparks und insbesondere für die Steuerung eines Windparks vorgeschlagen.

Besonders bevorzugt wird ein solches Windfeld vor der Rotorfläche und dabei insbesondere im Wesentlichen in der Größe der Rotorfläche bestimmt. Davon kann dann eine entsprechend verteilte Windbelastung auf den Rotor abgeleitet werden. Ggf. kann der Rotor darauf entsprechend reagieren. Gemäß einer Ausgestaltung wird dazu eine Einzelblattverstellung für den Rotor vorgesehen, bei der jedes Rotorblatt zumindest teilweise individuell verstellt wird. Dadurch kann sich der Rotor mit jedem Rotorblatt an die konkrete Windsituation in dem Windfeld einstellen.

Gemäß einer Ausführungsform wird vorgeschlagen, dass zum Bestimmen der wenigstens einen Windzustandsgröße im Rotorluvbereich ein Windmodell verwendet wird. Ein solches Windmodell beschreibt einen vereinfachten Zusammenhang zwischen der wenigstens einen Windzustandsgröße und dem wenigstens einen erfassten Windmesswert. Das Windmodell gibt wenigstens eine Windschätzgröße als Ausgangsgröße oder Zustandsgröße aus, wenn wenigstens ein erfasster Windmesswert eine Eingangsgröße des Windmodells bildet. Die wenigstens eine Windschätzgröße wird als wenigstens eine Windzustandsgröße verwendet.

Bspw. wird eine Windgeschwindigkeit an einer Position im Windmessbereich erfasst und als Eingangsgröße für das Windmodell verwendet. Eine Ausgangsgröße ist dann eine Windgeschwindigkeit an einer vorbestimmten Position im Rotorluvbereich. In diesem Fall stellt also das Windmodell einen Zusammenhang zwischen der einen Windgeschwindigkeit an der einen Position im Windmessbereich und einer Windgeschwindigkeit an einer anderen Position im Rotorluvbereich her.

Ein vorgeschlagenes Windmodell ist insbesondere aber komplexer, indem mehrere Windmesswerte als mehrere Eingangsgrößen eingegeben werden, vorzugsweise auch als zeitliche Verläufe, und mehrere Windschätzgrößen und damit mehrere Windzustandsgrößen als Ausgangsgrößen bestimmt werden, entsprechend auch als zeitliche Verläufe, wenn die Eingangsgrößen zeitliche Verläufe waren. Bspw. kann ein im Windmessbereich erfasstes Windfeld als Eingangsgröße verwendet werden. Dafür können mehrere Windmessgrößen, insbesondere mehrere Windgeschwindigkeiten unterschiedlicher Position im Windmessbereich bspw. als Eingangsvektor in das Modell eingegeben werden. Jeder Windmesswert, in dem genannten Beispiel also jede Windgeschwindigkeit, ist dann einer vorbestimmten Position im Windmessbereich zugeordnet.

Als Ergebnis gibt das Windmodell einen Ausgangsvektor aus, in dem mehrere Windzustandsgrößen enthalten sind, für den vorliegenden Fall also Windgeschwindigkeiten enthalten sind, die ebenfalls jeweils konkreten Positionen im Rotorluvbereich zugeordnet ist. Hier wird aber besonders vorgeschlagen, dass die Werte des Eingangsvektors auch zusammen betrachtet werden. Bspw. kann aus dem Zusammenhang dieser Werte eines solchen Eingangsvektors eine Tendenz abgeleitet werden, wie sich der Wind insbesondere mit der Höhe ändert und daraus kann dann auf die Werte im Rotorluvbereich geschlossen werden.

Vorzugsweise ist vorgesehen, dass das Windmodell aus Vergleichsmessungen erstellt wird, bei denen zusätzlich zum Erfassen des wenigstens einen Windmesswertes in den Windmessbereich wenigstens ein Windzustandsmesswert im Rotorluvbereich gemessen wird, insbesondere mit einer zur Windenergieanlage externen Messeinrichtung gemessen wird. Dabei ist vorgesehen, dass der wenigstens eine Windzustandsmesswert im Rotorluvbereich wenigstens einer Windzustandsgröße im Rotorluvbereich entspricht oder die wenigstens eine Windzustandsgröße im Rotorluvbereich daraus bestimmt wird.

Dazu wird vorgeschlagen, dass das Windmodell aus wenigstens einem Zusammenhang zwischen dem wenigstens einen erfassten Windmesswert in dem Windmessbereich und dem wenigstens einen Windzustandsmesswert im Rotorluvbereich abgeleitet wird. Es werden also Windmesswerte im Windmessbereich aufgenommen und zugehörige Messwerte im Rotorluvbereich aufgenommen. Zugehörige Werte im Rotorluvbereich sind dabei solche, die als zugehörig definiert werden.

Bspw. kann ein Windmessfeld im Windmessbereich im Bereich von 300 bis 400 Meter Höhe und dabei ebenfalls 100 Meter Breite aufgenommen werden und dazu gleichzeitig entsprechende Windzustandsmesswerte im Rotorluvbereich in einer Höhe von 70 bis 170 Metern bei ebenfalls entsprechender Breite von 100 Metern aufgenommen werden und dem genannten Bereich im Windmessbereich zugeordnet werden. Es wird dann zwischen diesen Windmesswerten und den Windzustandsmesswerten ein Zusammenhang hergestellt. Dieser Zusammenhang ist damit auch den beiden genannten Bereichen zugeordnet. Es ist dann also ein Zusammenhang gebildet worden zwischen dem Bereich 300 bis 400 Meter Höhe im Windmessbereich und dem Bereich von 70 bis 170 Meter Höhe im Rotorluvbereich. Der Zusammenhang zwischen diesen beiden Bereichen und damit der Zusammenhang zwischen den Windwerten zwischen diesen Bereich kann dann das Windmodell bilden.

Gemäß einer Ausführungsform wird vorgeschlagen, dass die wenigstens eine bestimmte Windzustandsgröße und/oder der wenigstens eine erfasste Windmesswert jeweils mit einer Positionsinformation zu einem Winddatensatz kombiniert werden und der Winddatensatz zur Verwendung außerhalb der Windenergieanlage ausgegeben wird.

Somit kann die erfasste Information über den Wind zusammen mit der Ortsinformation, also der Positionsinformation, auch außerhalb der Windenergieanlage von Nutzen sein. Durch die Positionsinformation kann diese Information über den Wind entsprechend lokal zugeordnet werden. Die Positionsinformation kann besonders neben der Höhe des jeweiligen Wertes, also der Windzustandsgröße und/oder des erfassten Windmesswertes, auch eine Ortsposition im Sinne einer Längen- und Breitenangabe zur Positionierung auf der Erdoberfläche darstellen oder beinhalten. Besonders kann eine solche Positionsinformation auch den konkreten Ort innerhalb eines Windparks bezeichnen.

Aus mehreren solchen Winddatensätzen zu unterschiedlichen Positionen bzw. Orten ist es möglich, ein Gesamtbild für einen größeren Bereich zu erstellen. Besonders kann ein Gesamtbild für einen Windpark erstellt werden.

Hier wurde besonders auch erkannt, dass die vorgeschlagene Erfassung wenigstens einer Windzustandsgröße die Aufnahme von Störungen des Windes, bedingt durch die jeweils messende Windenergieanlage, vermeidet. Somit kann aus vielen Winddatensätzen, die somit Informationen über den ungestörten Wind beinhalten, ein entsprechend umfassendes Bild bspw. für einen Windpark über die Windverteilung abgeleitet werden.

Gemäß einer Ausführungsform wird vorgeschlagen, dass aus der wenigstens einen Windzustandsgröße eine durch die Windenergieanlage erzeugbare Leistung bestimmt und/oder prognostiziert wird. Besonders kann durch das vorgeschlagene Messverfahren eine möglichst unverfälschte Information über den vorherrschenden Wind bestimmt werden. Daraus ist dann die durch die Windenergieanlage erzeugbare Leistung ableitbar. Hier liegt also die unverfälschte Information über den Wind, insbesondere die unverfälschte Windgeschwindigkeit, als Eingangsgröße zugrunde und in Kenntnis des Verhaltens und/oder Zustands der betreffenden Windenergieanlage kann die erzeugbare Leistung daraus abgeleitet werden.

Bspw. kommt auch in Betracht, dass die Windenergieanlage in einem gedrosselten Betrieb betrieben wird. In diesem Fall kann die erzeugbare Leistung, die nämlich erzeugbar wäre, wenn dieser gedrosselte Betrieb verlassen wird, jedenfalls nicht oder nicht alleine aus der tatsächlich erzeugten Leistung bestimmt werden. Im gedrosselten Betrieb kann es auch häufig ein Wunsch sein, einen entgangenen Gewinn zu berechnen, nämlich der Gewinn, der dadurch entgangen ist, dass die Windenergieanlage gedrosselt betrieben werden muss. Hierfür sollte die erzeugbare Leistung möglichst gut bekannt sein, um dann eine Differenz zur tatsächlich aktuell erzeugten Leistung zu bilden. Diese Differenz kann dann einer Vergütung zugrunde gelegt werden.

Es kommen auch Situationen in Betracht, bei denen die Windenergieanlage abgeregelt wird, um dadurch eine gewisse Leistungsreserve besonders als Regelleistung zur Verfügung zu haben. Dadurch, dass die erzeugbare Leistung bestimmt wird, kann in Kenntnis der erzeugten Leistung die Regelreserve gut beziffert werden. Ebenfalls kann in Kenntnis der erzeugbaren Leistung die erzeugte Leistung entsprechend so eingestellt werden, dass eine gewünschte Regelleistung bzw. Regelreserve vorhanden ist. Eine solche Leistungsreserve kann bspw. als prozentualer Wert der erzeugbaren Leistung angegeben werden, also bspw. 10 % der erzeugbaren Leistung.

Die Erfindung betrifft auch ein Verfahren zum Steuern einer Windenergieanlage. Die zugrunde gelegte Windenergieanlage weist einen Rotor mit mehreren Rotorblättern auf und die Rotorblätter überstreichen dabei bei Drehung des Rotors eine Rotorfläche. Dazu wird vorgeschlagen, wenigstens einen Windmesswert in einem Windmessbereich zu erfassen, wobei der Windmessbereich als ein Bereich oberhalb der Rotorfläche festgelegt ist. Weiterhin wird vorgeschlagen, wenigstens eine Windzustandsgröße in einem Rotorluvbereich in Abhängigkeit des wenigstens einen erfassten Windmesswertes zu bestimmen. Dabei ist der Rotorluvbereich als ein Bereich vor der Rotorfläche festgelegt. Dazu wird nun weiter vorgeschlagen, dass die Windenergieanlage in Abhängigkeit der wenigstens einen bestimmten Windzustandsgröße gesteuert wird.

Besonders kann ein möglichst ungestörter Wind erfasst werden, insbesondere eine möglichst ungestörte Windgeschwindigkeit und Windrichtung, was dann als gute unverfälschte Eingangsgröße zum Steuern der Windenergieanlage verwendet werden kann.

Vorzugsweise wird vorgeschlagen, dass aus der wenigstens einen Windzustandsgröße eine durch die Windenergieanlage erzeugbare Abgabeleistung bestimmt wird, und die Windenergieanlage so betrieben wird, dass sie eine reduzierte Abgabeleistung erzeugt und die reduzierte Abgabeleistung um einen vorbestimmten Reduzierungsanteil unterhalb der erzeugbaren Abgabeleistung liegt.

Hier wurde besonders erkannt, dass durch das vorgeschlagene Messverfahren der Windgeschwindigkeit eine gute Eingangsgröße gefunden kann, die unverfälscht ist und damit eine gute Basis für die Berechnung der erzeugbaren Abgabeleistung liefert. Besonders sind die bestimmten Windzustandsgrößen von dem Betrieb der Windenergieanlage unabhängig. Es kann also aus den bestimmten Windzustandsgrößen die erzeugbare Abgabeleistung bestimmt werden und davon abhängig die Windenergieanlage so betrieben werden, dass sie ihre Abgabeleistung reduziert.

Die Reduzierung der Abgabeleistung beinhaltet natürlich auch eine Änderung des Arbeitspunktes der Windenergieanlage. Die Bestimmung der Windzustandsgrößen bleibt allerdings unverändert und damit auch das Ergebnis der Bestimmung der Windzustandsgrößen. Mit anderen Worten hat die Veränderung des Betriebs der Windenergieanlage keinen Einfluss auf die Bestimmung der Windzustandsgröße und damit auch keinen Einfluss auf die Bestimmung der erzeugbaren Abgabeleistung. Es gibt also keinen Kreis, bei dem sich Messung und Veränderung des Betriebszustands gegenseitig beeinflussen. Die Reduzierung der Abgabeleistung kann somit stabil eingestellt werden.

Gemäß einer Ausgestaltung wird vorgeschlagen, dass in Abhängigkeit der wenigstens einen bestimmten Windzustandsgröße eine Einzelblattverstellung durchgeführt wird, bei der jedes Rotorblatt der Windenergieanlage individuell verstellt wird, insbesondere um eine im Rotorluvbereich erkannte lokale Windverteilung individuell zu berücksichtigen. Das vorgeschlagene Verfahren ermöglicht es, ein Windfeld im Rotorluvbereich zu bestimmen, aus dem sich über das Rotorfeld verteilt unterschiedliche Windgeschwindigkeiten ergeben können. Solche unterschiedlichen Windgeschwindigkeiten können entsprechend zu unterschiedlichen Belastungen führen und daran kann sich die Windenergieanlage durch individuelle Verstellung der Rotorblätter anpassen.

Vorzugsweise wird vorgeschlagen, dass zum Erfassen der wenigstens einen Windzustandsgröße ein Verfahren gemäß wenigstens einer vorstehend beschriebenen Ausführungsform ausgeführt wird. Damit können all die Vorteile des vorgeschlagenen Verfahrens in die Steuerung der Windenergieanlage einfließen.

Erfindungsgemäß wird auch ein Verfahren zum Steuern eines mehrere Windenergieanlagen aufweisenden Windparks vorgeschlagen, wobei die Windenergieanlagen jeweils einen Rotor mit mehreren Rotorblättern aufweisen und die Rotorblätter bei Drehung des Rotors eine Rotorfläche überstreichen. Hierzu wird vorgeschlagen, für wenigstens zwei der Windenergieanlagen, insbesondere für alle der Windenergieanlagen, jeweils wenigstens einen Windmesswert in einem Windmessbereich zu erfassen, wobei der Windmessbereich jeweils als ein Bereich oberhalb der Rotorfläche der betreffenden Windenergieanlage festgelegt ist. Dazu wird weiter vorgeschlagen, eine Windverteilungsschätzung zu ermitteln, die eine Windverteilung im Windpark beschreibt. Weiter wird vorgeschlagen, den Windpark in Abhängigkeit der ermittelten Windverteilungsschätzung zu steuern.

Somit wird hier vorgeschlagen, in dem Windmessbereich oberhalb der Rotorfläche Windmesswerte aufzunehmen. Solche Windmesswerte sind somit im Wesentlichen durch die Windenergieanlage unverfälscht. Wird dies für mehrere insbesondere viele Windenergieanlagen im Windpark durchgeführt, so ergeben sich viele Werte über den Wind, insbesondere über seine Windgeschwindigkeit und seine Windrichtung, die jeweils den unverfälschten Wind beschreiben sollten und damit eine gute Basis für eine Erfassung einer Windverteilung in dem Windpark bilden. Vorzugsweise wird vorgeschlagen, dass das Erfassen des jeweils wenigstens einen Windmesswertes in dem betreffenden Windmessbereich mittels eines im Wesentlichen vertikal nach oben gerichteten LIDAR-Systems durchgeführt wird, das insbesondere auf einer Gondel der Windenergieanlage angeordnet ist.

Es kann also aus all diesen unverfälschten Windmesswerten entsprechend ein unverfälschtes Gesamtbild der Windverteilung im Windpark erstellt werden und das bildet eine gute Grundlage für die Steuerung des Windparks. Besonders liegt hier der Gedanke zugrunde, dass trotz der Messung des ungestörten Windes aber die Störungen bekannt sind, die die Windenergieanlagen dann je nach Betrieb selbst herausrechnen können. Daher kann auch berücksichtigt werden, bei welcher Windrichtung und welcher Windstärke und/oder weiterer Windzustandsgrößen, welche Windenergieanlage beeinflusst ist, und wie sie beeinflusst ist. Eine Grundlage auch für die Berücksichtigung solcher gegenseitiger Beeinflussungen, die auch als Wake-Effekte bezeichnet werden, bildet vorzugsweise aber die unverfälschte Erfassung des Windes und insbesondere der Windverteilung im Windpark.

Vorzugsweise wird auch für die Steuerung des Windparks vorgeschlagen, dass zum Erfassen wenigstens einer Windzustandsgröße jeweils an einer, mehreren oder allen der Windenergieanlagen des Windparks ein Verfahren gemäß wenigstens einer vorstehend erläuterten Ausführungsform des Verfahrens zum Erfassen wenigstens einer Windzustandsgröße verwendet wird. Damit können all die dort genannten Vorzüge zum Steuern des Windparks eingesetzt werden. Besonders die Möglichkeit, unverfälschte Windgrößen aufzunehmen und insbesondere auch unverfälschte Windgrößen im Luv-Bereich jedes Rotors der betreffenden Windenergieanlage zu bestimmen, kann eine gute Basis für das Steuern eines Windparks bilden.

Erfindungsgemäß wird auch eine Windenergieanlage vorgeschlagen, die einen Rotor mit mehreren Rotorblättern aufweist, wobei die Rotorblätter bei Drehung des Rotors eine Rotorfläche überstreichen. Die Windenergieanlag weist eine Windmesseinrichtung zum Erfassen wenigstens eines Windmesswertes in einem Windmessbereich auf, wobei der Windmessbereich als ein Bereich oberhalb der Rotorfläche festgelegt ist. Weiterhin weist die Windenergieanlage eine Auswerteeinrichtung auf zum Bestimmen wenigstens einer Windzustandsgröße in einem Rotorluvbereich in Abhängigkeit des wenigstens einen erfassten Windmesswertes, wobei der Rotorluvbereich als ein Bereich vor der Rotorfläche festgelegt ist.

Die Windenergieanlage kann somit wie vorstehend beschrieben auf vorteilhafte Art und Weise wenigstens eine Windzustandsgröße erfassen. Vorzugsweise ist die Windenergieanlage dazu vorbereitet, ein Verfahren zum Erfassen wenigstens einer Windzustandsgröße gemäß einer dazu vorstehend beschriebenen Ausführungsform auszuführen. Außerdem oder alternativ ist die Windenergieanlage dazu vorbereitet, ein Verfahren zum Steuern einer Windenergieanlage gemäß wenigstens einer dazu vorstehend beschriebenen Ausführungsform auszuführen.

Erfindungsgemäß wird auch ein Windpark vorgeschlagen, der mehrere Windenergieanlagen aufweist. Vorzugsweise sind diese Windenergieanlagen so ausgebildet wie gemäß einer vorstehend zu Windenergieanlagen beschriebenen Ausführungsform erläutert wurde.

Außerdem oder alternativ ist der Windpark dazu vorbereitet, ein Verfahren zum Steuern eines Windparks gemäß wenigstens einer vorstehend beschriebenen entsprechenden Ausführungsform auszuführen. Außerdem oder alternativ weist der Windpark eine Parksteuereinrichtung auf, die dazu vorbereitet ist, ein Verfahren gemäß wenigstens einer vorstehend beschriebenen Ausführungsform zum Steuern eines Windparks auszuführen.

Somit können all die vorstehend beschriebenen Ausführungsformen und Vorteile bei einer entsprechenden Windenergieanlage und/oder bei einem entsprechenden Windpark zur Geltung kommen.

Die Erfindung wird nun beispielhaft anhand von Ausführungsformen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: veranschaulicht ein Verfahren zum Erfassen von Windzustandsgrößen.

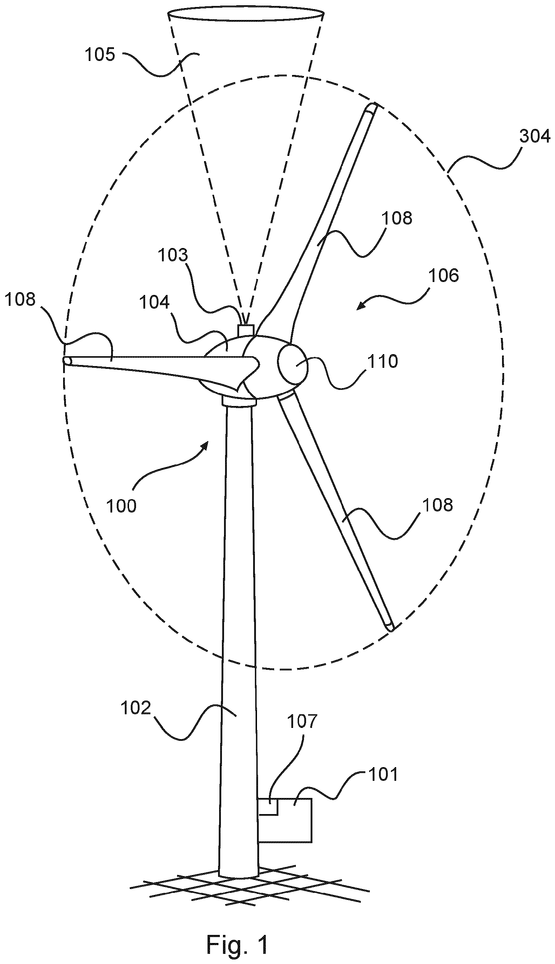

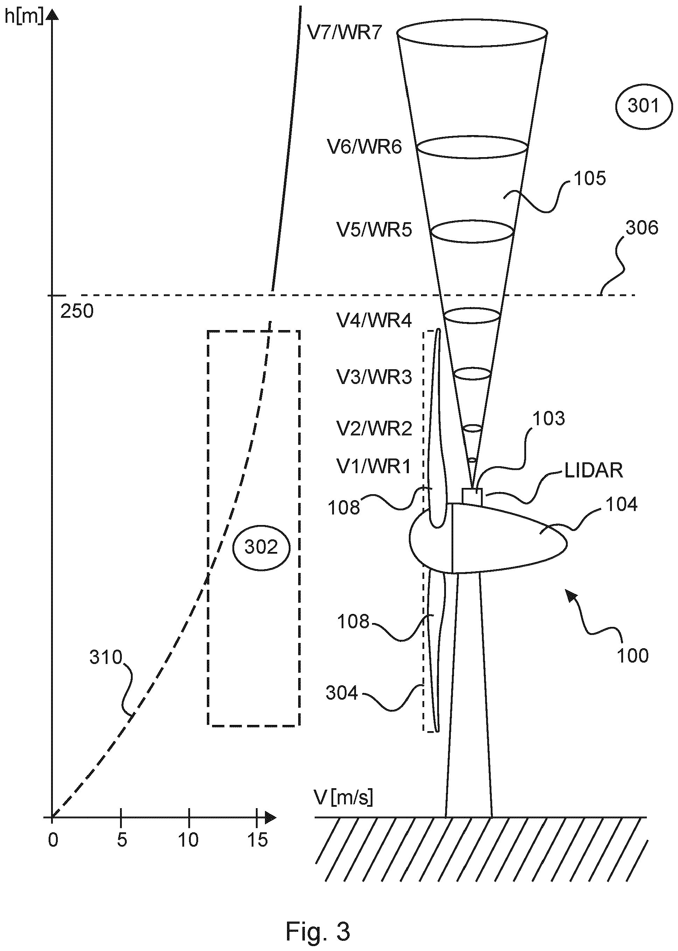

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an. Zum Steuern der Windenergieanlage 100 ist eine Steuereinrichtung 101 vorgesehen, die alternativ auch in der Gondel 104 angeordnet sein kann. Auf der Gondel 104 ist eine Windmesseinrichtung 103 angeordnet, die vereinfachend und synonym als Messeinrichtung bezeichnet werden kann, und zu der ein nach oben weisender Messkegel 105 angedeutet ist. Die Messeinrichtung 103 weist somit im Wesentlichen vertikal nach oben, wobei die Messreichweite über die Figur 1 hinausreicht. Weitere Details werden im Zusammenhang mit Figur 3 beschrieben.

Die Messeinrichtung 103 kann somit Windmesswerte erfassen und daraus können Windzustandsgrößen bestimmt werden. Dazu ist eine Auswerteeinrichtung 107 vorgesehen, die hier als Teil der Steuereinrichtung 101 dargestellt ist. Auch die Auswerteeinrichtung 107 kann im Bereich der Gondel 104 und insbesondere in der Nähe der Messeinrichtung 103 angeordnet sein. In dem Fall besteht eine Kommunikationsverbindung zwischen der Messeinrichtung 103 und der Auswerteeinrichtung 107. Alternativ kann die Auswertung, also das Bestimmen der Windzustandsgrößen aus den Windmesswerten in der Messeinrichtung 103 selbst erfolgen. In diesem Fall kann die Auswerteeinrichtung 107 als Teil der Messeinrichtung 103 angesehen werden.

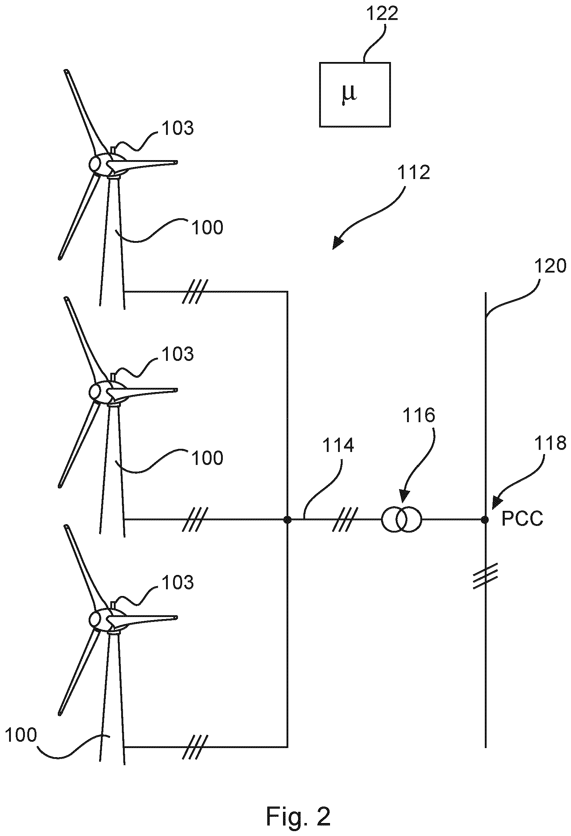

Figur 2 zeigt einen Windpark 112 mit beispielhaft drei Windenergieanlagen 100, die gleich oder verschieden sein können. Die drei Windenergieanlagen 100 stehen somit repräsentativ für eine im Grunde beliebige Anzahl von Windenergieanlagen eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112.Beispielsweise kann das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem eine Parksteuereinrichtung 122 auf. Diese Parksteuereinrichtung 122 ist mit allen Windenergieanlagen 100 gekoppelt, um Informationen von den Windenergieanlagen 100 zu erhalten und Informationen, als auch Steuerbefehle, an die Windenergieanlagen 100 zu übertragen. Der besseren Übersichtlichkeit halber sind keine Kommunikationseinrichtungen eingezeichnet. Die Kommunikation könnte auch drahtlos erfolgen.

Jede der Windenergieanlagen 100 weist eine Messeinrichtung 103 auf. Auch Informationen der Messeinrichtung 103 können an die Parksteuereinrichtung 122 übertragen werden. Ebenso kann die Parksteuereinrichtung 122 solche von den Messeinrichtungen 103 erhaltenen Informationen auswerten und/oder an die übrigen Windenergieanlagen verteilen. Sämtliche Windenergieanlagen 100 der Figur 2 weisen vorzugsweise auch eine Steuereinrichtung 101 und eine Messwerteinrichtung 107 auf, wie im Zusammenhang zu Figur 1 beschrieben wurde. Zur besseren Übersichtlichkeit halber sind diese in Figur 2 allerdings nicht eingezeichnet.

Figur 3 zeigt schematisch eine Windenergieanlage 100, die somit der Windenergieanlage 100 der Figur 1 entsprechen kann. Auf der Gondel 104 ist eine Messeinrichtung 103 angeordnet und als LIDAR-Messaufnehmer ausgebildet. Dieser LIDAR-Messaufnehmer führt somit eine laserbasierte Messung aus bzw. basiert auf dem LIDAR-Verfahren. Dabei ist diese Messeinrichtung 103 nach oben ausgerichtet, so dass ein nach oben weisender Messkegel 105 ausgebildet wird. Dieser entspricht dem Messkegel 105 der Figur 1, der in Figur 1 allerdings nur kleiner angedeutet ist.

Das vorgeschlagene Verfahren unterscheidet besonders zwischen einem Windmessbereich 301 und einem Rotorluvbereich 302. Diese beiden Bereiche unterscheiden sich besonders darin, dass sie in unterschiedlichen Höhen angeordnet sind. Der Windmessbereich 301 ist somit oberhalb der Rotorfläche 304 angeordnet. Dazu ist eine Höhengrenze 306 gestrichelt eingezeichnet, oberhalb der der Windmessbereich 301 liegt. Somit ist auch vorgesehen, dass in dem Windmessbereich 301 und damit oberhalb der Höhengrenze 306 gemessen wird, also Messwerte aufgenommen werden, nämlich die Windmesswerte aufgenommen werden, wohingegen unterhalb der Höhengrenze 306 Windzustandsgrößen bestimmt werden. Insoweit können die Windzustandsgrößen auch als rekonstruierte Messwerte bezeichnet werden.

Jedenfalls liegt der Windmessbereich 301 oberhalb der Rotorfläche 304, beginnt aber erst in einem gewissen Abstand oberhalb der Rotorfläche 304, um einen Einfluss des Rotors 106 bzw. der Rotorblätter 108 auf die in dem Windmessbereich 301 durchzuführenden Messungen auszuschließen. Die Rotorfläche 304 ist in der Figur 3 angedeutet, in der Figur 1 aber besser zu erkennen. Die Rotorfläche 304 ist insoweit die Fläche, die die Rotorblätter 108 bei Drehung des Rotors 106 überstreichen. Dazu ist in Figur 1 der Rand der Rotorfläche 304 eingezeichnet, nämlich gestrichelt. In Figur 3 ist die Rotorfläche 304 in einer Seitenansicht gezeigt. Die Höhengrenze 306 und damit der Windmessbereich 301 liegen mit etwas Abstand noch oberhalb der Rotorfläche 304.

Zur weiteren Veranschaulichung ist in Figur 3 ein Diagramm eingezeichnet, das an seiner Abszisse die Windgeschwindigkeit aufgetragen hat und an seiner Ordinate die Höhe. Das Diagramm zeigt also an, in welcher Höhe etwa welche Windgeschwindigkeit vorliegt, wobei das Diagramm der Figur 3 insoweit einen beispielhaften Verlauf zeigt. Es ist zu erkennen, dass am Boden die Windgeschwindigkeit 0, also 0 Meter pro Sekunde beträgt, und mit der Höhe zunimmt. Insoweit ist in dem Diagramm ein Windgeschwindigkeitsverlauf 310 eingezeichnet. Im Bereich unterhalb der Höhengrenze 306 ist der Windgeschwindigkeitsverlauf 310 gestrichelt eingezeichnet, um anzudeuten, dass dort rekonstruierte Messwerte vorliegen. Oberhalb der Höhengrenze 306 ist der Windgeschwindigkeitsverlauf 310 als durchgezogene Linie eingezeichnet, um entsprechend anzudeuten, dass dort Messwerte vorliegen.

Für den Betrieb der Windenergieanlage ist unterhalb der Höhengrenze 306 besonders der Rotorluvbereich 302 von Bedeutung, der dort als gestrichelt dargestelltes Rechteck verdeutlicht ist, was auch als seitliche Ansicht auf eine Kreisscheibe verstanden werden kann: Theoretisch kann die Dicke einer solchen Kreisscheibe allerdings gegen 0 gehen.

Das vorgeschlagene Verfahren erfolgt nun so, dass mit dem Messkegel 105 Windmesswerte in dem Windmessbereich 301 aufgenommen werden. Der Messkegel 105 ist zwar auch unterhalb der Höhengrenze 306 eingezeichnet, dort werden aber keine Messwerte aufgenommen bzw. dort aufgenommene Messwerte werden für das vorgeschlagene Verfahren nicht verwendet. Exemplarisch sind oberhalb der Höhengrenze 306 in unterschiedlicher Höhe drei Windgeschwindigkeitswerte V5, V6 und V7 angedeutet sowie drei Windrichtungswerte WR5, WR6 und WR7. Das Diagramm zeigt insoweit allerdings mit dem Windgeschwindigkeitsverlauf 310 nur die Windgeschwindigkeit. Der Verlauf einer Windrichtung kann ebenfalls eingezeichnet werden, was hier der besseren Übersichtlichkeit halber unterlassen wurde.

Aus diesen drei Windgeschwindigkeitswerten und drei Windrichtungswerten, die exemplarisch für viele weitere Werte stehen, kann auf Windgeschwindigkeitswerte und Windrichtungswerte unterhalb der Höhengrenze 306 und insbesondere im Bereich des Rotorluvbereichs 302 geschlossen werden. Dazu sind exemplarisch die Windgeschwindigkeitswerte V1, V2, V3 und V4 eingezeichnet, sowie die Windrichtungswerte WR1, WR2, WR3 und WR4. Gemäß einer Ausgestaltung kann es ausreichen, diese Werte für den oberen Bereich der Rotorfläche 304 und damit des Rotorluvbereichs 302 zu verwenden, wie das in der Fig. 3 angedeutet ist. Die Werte können aber auch vollständig bis zum untersten Ende des Rotorluvbereichs 302, wie er in Figur 3 eingezeichnet ist, bestimmt werden.

Der Gedanke der Rekonstruktion ist bereits durch den Windgeschwindigkeitsverlauf 310 angedeutet. Die gemessenen Windgeschwindigkeiten könnten also gemäß eines solchen kontinuierlichen Verlaufs gemäß dieses Windgeschwindigkeitsverlaufs 310 rekonstruiert werden. Es ist aber anzumerken, dass insoweit dieser Windgeschwindigkeitsverlauf 310 nur der Veranschaulichung dient.

Die Durchführung einer solchen Rekonstruktion kann vorteilhaft mit einem Modell erfolgen, das angelernt wird. Dazu können verschiedene Windmesswerte, wie die Windgeschwindigkeit, die Windrichtung, eine Turbulenzintensität, eine Windscherung, also eine Veränderung der Windgeschwindigkeit mit dem Ort, insbesondere mit der Höhe, als auch ein Wind-Veer, das auch vereinfachend nur als Veer bezeichnet wird, also eine Veränderung der Windrichtung mit dem Ort, insbesondere mit der Höhe, erfasst werden, sowie eine Winddrehung, die eine zeitliche Veränderung der Windrichtung bezeichnet. Diese Erfassung kann nämlich mittels der Messeinrichtung 103 erfolgen.

Dazu können, auch für unterschiedliche Bedingungen, also unterschiedliche Windgeschwindigkeiten, unterschiedliche Windrichtungen, unterschiedliche Turbulenzintensitäten, unterschiedliche Windscherungen und unterschiedliche Winddrehung entsprechende Messwerte auch in unterschiedlichen Höhen im Rotorluvbereich 302 aufgenommen werden. Dabei ist anzumerken, dass bei einer Änderung der Windrichtung sich der Rotorluvbereich entsprechend auch ändert. Um es anschaulich zu erläutern, würde bei einer Windrichtungsänderung um 180° der in Figur 3 beispielhaft eingezeichnete Rotorluvbereich 302 dann auf der rechten Seite der Windenergieanlage 100 angeordnet sein. Auch die Gondel 103 würde dann entsprechend in diese andere Richtung ausgerichtet sein.

Jedenfalls können zu den Messungen mit der Messeinrichtung 103, die im Windmessbereich 301 misst, zum Anlernen mit einer anderen Messeinrichtung, die hier nicht dargestellt ist, korrespondierende Windwerte im Rotorluvbereich 302 aufgenommen werden. Daraus kann das Modell angelernt werden.

In einem einfachen Fall kann das Modell darin bestehen, dass all diese Messwerte der Messeinrichtung 103 und korrespondierende Messwerte mit dem nicht dargestellten Vergleichsmessgerät in entsprechenden Tabellen, ggf. mehrdimensionale Tabellen gespeichert werden. Auch die jeweiligen Positionen der einzelnen Messwerte und der rekonstruierten bzw. zu rekonstruierenden Messwerte werden aufgenommen und abgespeichert. Nach der Anlernphase, wenn das weitere Messgerät nicht mehr zur Verfügung steht, kann dann abhängig der mit der Messeinrichtung 103 aufgenommenen Windmesswerte in den Tabellen nachgeschlagen werden und die entsprechenden damals dazu aufgenommenen Messwerte im Rotorluvbereich 302 verwendet werden. Insoweit keine konkreten Werte aufgenommen wurden, kann zwischen zwei Werten, oder mehreren Werten, interpoliert werden, oder es kann extrapoliert werden.

Alternativ können aber auch analytische Modelle aus den Vergleichsmessungen abgeleitet werden. Eine andere Variante besteht darin, dass zur Modellbildung künstliche Intelligenz eingesetzt wird.

Im Übrigen können nicht nur die Windgeschwindigkeiten und Windrichtungen in unterschiedlichen Höhen aufgenommen und auch für andere aber unterschiedliche Höhen rekonstruiert werden, sondern auch andere Windmesswerte, wie eine Turbulenzintensität, eine Windscherung oder Winddrehung können in unterschiedlichen Höhen aufgenommen werden und zur Rekonstruktion herangezogen werden. Darüber hinaus können all diese Werte, oder ein Teil davon, nicht nur in unterschiedlichen Höhen, sondern auch unterschiedlichen horizontalen Positionen aufgenommen werden, um daraus letztlich ein zweidimensionales Windfeld, oder ggf. sogar ein dreidimensionales Windfeld abzuleiten.

## Patentansprüche

1. Verfahren zum Erfassen wenigstens einer Windzustandsgröße (V1, V2, V3, V4) mittels einer Windenergieanlage (100),
wobei die Windenergieanlage (100) einen Rotor mit mehreren Rotorblättern aufweist und die Rotorblätter bei Drehung des Rotors eine Rotorfläche (304) überstreichen, umfassend die Schritte:
- Erfassen wenigstens eines Windmesswertes (V5, V6, V7) in einem Windmessbereich (301), wobei
- der Windmessbereich (310) als ein Bereich oberhalb der Rotorfläche (304) festgelegt ist, und
- Bestimmen wenigstens einer Windzustandsgröße (V1, V2, V3, V4) in einem Rotorluvbereich (302) in Abhängigkeit des wenigstens einen erfassten Windmesswertes (V5, V6, V7), wobei
- der Rotorluvbereich (200) als ein Bereich vor der Rotorfläche (R_{A}) festgelegt ist.

2. Verfahren nach Anspruch 1,
**dadurch gekennzeichnet, dass**
- zum Erfassen des wenigstens einen Windmesswertes (V5, V6, V7) eine Windmesseinrichtung (103) auf der Windenergieanlage (100) angeordnet ist, insbesondere auf einer Gondel (104) der Windenergieanlage (100), und
- die Windmesseinrichtung (103) insbesondere dazu eingerichtet ist, unabhängig von einer Azimutverdrehung der Windenergieanlage (100) eine ortsfeste Windmessung auszuführen.

3. Verfahren nach Anspruch 1 oder 2,
**dadurch gekennzeichnet, dass**
- zum Erfassen des wenigstens einen Windmesswertes (V5, V6, V7) eine im Wesentlichen vertikal nach oben gerichtete Windmessung ausgeführt wird.

4. Verfahren nach einem der vorstehenden Ansprüche,
**dadurch gekennzeichnet, dass**
- das Erfassen des wenigstens einen Windmesswertes (V5, V6, V7) mit einer laserbasierten Windmessung ausgeführt wird, insbesondere mit einer auf dem LIDAR-Verfahren basierenden Messeinrichtung (103), und/oder
- mit einer einen kegelförmigen Messbereich aufweisenden Windmesseinrichtung (103).

5. Verfahren nach einem der vorstehenden Ansprüche,
**dadurch gekennzeichnet, dass**
- die wenigstens eine Windzustandsgröße (V1, V2, V3, V4) eine Windzustandsgröße ist aus der Liste aufweisend:
- eine Windgeschwindigkeit (V),
- eine Windrichtung (WR),
- eine Turbulenz-Intensität (TI),
- eine Windscherung (α), insbesondere ein Wind-Shear und/oder ein Wind-Veer, und
- eine Winddrehung (θ), und/oder dass
- mehrere örtlich in dem Windmessbereich (103) verteilte Windmesswerte (V5, V6, V7) erfasst werden und daraus
- mehrere örtlich in dem Rotorluvbereich (302) verteilte Windzustandsgrößen (V1, V2, V3, V4) bestimmt werden,
- um daraus ein Windfeld im Rotorluvbereich (302) zu bestimmen.

6. Verfahren nach einem der vorstehenden Ansprüche,
**dadurch gekennzeichnet, dass**
- zum Bestimmen der wenigstens einen Windzustandsgröße (V1, V2, V3, V4) im Rotorluvbereich (302)
- ein Windmodell verwendet wird, wobei
- das Windmodell einen vereinfachten Zusammenhang zwischen der wenigstens einen Windzustandsgröße (V1, V2, V3, V4) und dem wenigstens einen erfassten Windmesswert (V5, V6, V7) beschreibt, und
- das Windmodell mit wenigstens einem erfassten Windmesswert als Eingangsgröße wenigstens eine Windschätzgröße als Ausgangsgröße oder Zustandsgröße ausgibt und
- die wenigstens eine Windschätzgröße als die wenigstens eine Windzustandsgröße (V1, V2, V3, V4) verwendet wird, wobei insbesondere
- das Windmodell aus Vergleichsmessungen erstellt wird, bei denen
- zusätzlich zum Erfassen des wenigstens eines Windmesswertes (V5, V6, V7) in dem Windmessbereich (301) wenigstens ein Windzustandsmesswert im Rotorluvbereich gemessen wird, insbesondere mit einer zur Windenergieanlage (100) externen Messeinrichtung,
- der wenigstens eine Windzustandsmesswert im Rotorluvbereich (302) wenigstens einer Windzustandsgröße (V1, V2, V3, V4) im Rotorluvbereich (200) entspricht, oder die wenigstens eine Windzustandsgröße (V1, V2, V3, V4) im Rotorluvbereich daraus bestimmt wird, und
- das Windmodell aus wenigstens einem Zusammenhang zwischen dem wenigstens einen erfassten Windmesswertes (V5, V6, V7) in dem Windmessbereich (301) und dem wenigstens einen Windzustandsmesswert im Rotorluvbereich abgeleitet wird.

7. Verfahren nach einem der vorstehenden Ansprüche,
**dadurch gekennzeichnet, dass**
- die wenigstens eine bestimmte Windzustandsgröße (V1, V2, V3, V4) und/oder
- der wenigstens eine erfasste Windmesswert (V5, V6, V7)
- jeweils mit einer Positionsinformation zu einem Winddatensatz kombiniert werden und
- der Winddatensatz zur Verwendung außerhalb der Windenergieanlage (100) ausgegeben wird, und/oder dass
- aus derwenigstens einen Windzustandsgröße (V1, V2, V3, V4) eine durch die Windenergieanlage erzeugbare Leistung bestimmt und/oder prognostiziert wird.

8. Verfahren zum Steuern einer Windenergieanlage (100), wobei die Windenergieanlage (100) einen Rotor (106) mit mehreren Rotorblättern (108) aufweist und die Rotorblätter (108) bei Drehung des Rotors (106) eine Rotorfläche (304) überstreichen, umfassend die Schritte:
- Erfassen wenigstens eines Windmesswertes (V5, V6, V7) in einem Windmessbereich (301), wobei
- der Windmessbereich (301) als ein Bereich oberhalb der Rotorfläche (304) festgelegt ist,
- Bestimmen wenigstens einer Windzustandsgröße (V1, V2, V3, V4) in einem Rotorluvbereich (302) in Abhängigkeit des wenigstens einen erfassten Windmesswertes (v_{m,i}), wobei
- der Rotorluvbereich (302) als ein Bereich vor der Rotorfläche (304) festgelegt ist, und
- Steuern der Windenergieanlage (100) in Abhängigkeit der wenigstens einen bestimmten Windzustandsgröße (V1, V2, V3, V4).

9. Verfahren nach Anspruch 8,
**dadurch gekennzeichnet, dass**
- aus derwenigstens einen Windzustandsgröße (V1, V2, V3, V4) eine durch die Windenergieanlage (100) erzeugbare Abgabeleistung bestimmt wird, und
- die Windenergieanlage (100) so betrieben wird, dass sie eine reduzierte Abgabeleistung erzeugt und die reduzierte Abgabeleistung um einen vorbestimmten Reduzierungsanteil unterhalb der erzeugbaren Abgabeleistung liegt.

10. Verfahren nach Anspruch 8 oder 9,
**dadurch gekennzeichnet, dass**
in Abhängigkeit des wenigstens einen Windmesswertes (V5, V6, V7) und/oder in Abhängigkeit der wenigstens einen Windzustandsgröße (V1, V2, V3, V4)
- lokale Wetterphänomene erfasst werden, insbesondere das Auftreten eines Low-Level-Jets, und abhängig davon die Steuerung angepasst wird,
- eine lokale Windbelastung prognostiziert wird und abhängig der prognostizierten lokalen Windbelastung die Steuerung zum Schutz der Windenergieanlage (100) angepasst wird,
- eine Regelleistung bereitstellt wird, um ein elektrisches Versorgungsnetz (120), in das die Windenergieanlage (100) einspeist stützen zu können, und/oder
- eine Ertragsprognose durchgeführt oder verbessert wird, insbesondere eine abhängig einer Wettervorhersage erstellte Ertragsprognose verbessert wird.

11. Verfahren nach einem der Ansprüche 8 bis 10,
**dadurch gekennzeichnet, dass**
- in Abhängigkeit der wenigstens einen bestimmten Windzustandsgröße (V1, V2, V3, V4) eine Einzelblattverstellung durchgeführt wird, bei der jedes Rotorblatt der Windenergieanlage (100) individuell verstellt wird, insbesondere um eine im Rotorluvbereich (302) erkannte lokale Windverteilung individuell zu berücksichtigen.

12. Verfahren nach einem der Ansprüche 8 bis 11,
**dadurch gekennzeichnet, dass**
zum Erfassen der wenigstens einen Windzustandsgröße (V1, V2, V3, V4) ein Verfahren gemäß einem der Ansprüche 1 bis 7 ausgeführt wird.

13. Verfahren zum Steuern eines mehrere Windenergieanlagen (100) aufweisenden Windparks (112), wobei die Windenergieanlagen (100) jeweils einen Rotor (106) mit mehreren Rotorblättern (108) aufweisen und die Rotorblätter (108) bei Drehung des Rotors (106) eine Rotorfläche (304) überstreichen,
umfassend die Schritte:
- Erfassen für wenigstens zwei der Windenergieanlagen (100), insbesondere für alle der Windenergieanlagen (100), jeweils wenigstens eines Windmesswertes (V5, V6, V7ᵢ) in einem Windmessbereich (301), wobei
- der Windmessbereich (301) jeweils als ein Bereich oberhalb der Rotorfläche (304) der betreffenden Windenergieanlage (100) festgelegt ist, und
- Ermitteln einer Windverteilungsschätzung, die eine Windverteilung im Windpark beschreibt, und
- Steuern des Windparks in Abhängigkeit der ermittelten Windverteilungsschätzung, und/oder dass
zum Erfassen wenigstens einer Windzustandsgröße (V1, V2, V3, V4) jeweils an einer, mehreren oder allen der Windenergieanlagen (100) des Windparks (112) ein Verfahren nach einem der Ansprüche 1 bis 7 verwendet wird.

14. Windenergieanlage (100) umfassend
- einen Rotor (106) mit mehreren Rotorblättern (108), wobei die Rotorblätter (108) bei Drehung des Rotors (106) eine Rotorfläche (304) überstreichen,
- eine Windmesseinrichtung (103) zum Erfassen wenigstens eines Windmesswertes (V5, V6, V7) in einem Windmessbereich (301), wobei
- der Windmessbereich (301) als ein Bereich oberhalb der Rotorfläche (304) festgelegt ist, und
- eine Auswerteeinrichtung zum Bestimmen wenigstens einer Windzustandsgröße (V1, V2, V3, V4) in einem Rotorluvbereich (302) in Abhängigkeit des wenigstens einen erfassten Windmesswertes (V5, V6, V7), wobei
- der Rotorluvbereich (302) als ein Bereich vor der Rotorfläche (304) festgelegt ist und/oder dass
- die Windenergieanlage (100) dazu vorbereitet ist, ein Verfahren zum Erfassen wenigstens einer Windzustandsgröße (V1, V2, V3, V4) gemäß einem der Ansprüche 1 bis 7 auszuführen, und/oder
- die Windenergieanlage dazu vorbereitet ist, ein Verfahren zum Steuern einer Windenergieanlage (100) gemäß einem der Ansprüche 8 bis 12 auszuführen, wobei dazu insbesondere eine Steuereinrichtung (101) vorgesehen ist.

15. Windpark (112) umfassend mehrere Windenergieanlagen, wobei
- wenigstens eine der Windenergieanlagen (100) gemäß Anspruch 14 ausgebildet ist,
- der Windpark (112) dazu vorbereitet ist, ein Verfahren gemäß Anspruch 13 auszuführen, und/oder
- der Windpark (112) eine Parksteuereinrichtung (122) aufweist, die dazu vorbereitet ist, ein Verfahren gemäß Anspruch 13 auszuführen.

## Claims

1. Method for detecting at least one wind status variable (V1, V2, V3, V4) by means of a wind turbine (100),
wherein the wind turbine (100) has a rotor having a plurality of rotor blades and the rotor blades pass over a rotor face (304) when the rotor rotates, comprising the steps of:
- detecting at least one wind measurement value (V5, V6, V7) in a wind measurement region (301), wherein
- the wind measurement region (310) is determined as a region above the rotor face (304), and
- determining at least one wind status variable (V1, V2, V3, V4) in an upwind rotor region (302) in accordance with the at least one detected wind measurement value (V5, V6, V7), wherein
- the upwind rotor region (200) is determined as a region in front of the rotor face (R_{A}).

2. Method according to claim 1,
**characterised in that**,
- in order to detect the at least one wind measurement value (V5, V6, V7), a wind measurement device (103) is arranged on the wind turbine (100), in particular on a nacelle (104) of the wind turbine (100), and
- the wind measurement device (103) is in particular configured, regardless of an azimuth rotation of the wind turbine (100), to carry out a fixed wind measurement.

3. Method according to claim 1 or 2,
**characterised in that**,
- in order to detect the at least one wind measurement value (V5, V6, V7), a substantially vertically upwardly directed wind measurement is carried out.

4. Method according to any one of the preceding claims, **characterised in that**
- the detection of the at least one wind measurement value (V5, V6, V7) is carried out using a laser-based wind measurement, in particular with a measurement device (103) which is based on the LIDAR method, and/or
- with a wind measurement device (103) which has a conical measurement region.

5. Method according to any one of the preceding claims, **characterised in that**
- the at least one wind status variable (V1, V2, V3, V4) is a wind status variable from the list having:
- a wind speed (V),
- a wind direction (WR),
- a turbulence intensity (TI),
- a wind shear (α), in particular a wind shear and/or a wind veer, and
- a wind rotation (θ), and/or **in that**
- a plurality of wind measurement values (V5, V6, V7) which are distributed locally in the wind measurement region (103) are detected and from that
- a plurality of wind status variables (V1, V2, V3, V4) which are distributed locally in the upwind rotor region (302) are determined,
- in order from this to determine a wind field in the upwind rotor region (302).

6. Method according to any one of the preceding claims, **characterised in that**,
- in order to determine the at least one wind status variable (V1, V2, V3, V4) in the upwind rotor region (302),
- a wind model is used, wherein
- the wind model describes a simplified relationship between the at least one wind status variable (V1, V2, V3, V4) and the at least one detected wind measurement value (V5, V6, V7), and
- the wind model outputs with at least one detected wind measurement value as an input variable at least one wind estimation variable as an output variable or status variable, and
- the at least one wind estimation variable is used as the at least one wind status variable (V1, V2, V3, V4), wherein in particular
- the wind model is generated from comparison measurements, in which
- in addition to detecting the at least one wind measurement value (V5, V6, V7) in the wind measurement region (301) at least one wind status measurement value is measured in the upwind rotor region, in particular with a measurement device which is external with respect to the wind turbine (100),
- the at least one wind status measurement value in the upwind rotor region (302) corresponds to at least one wind status variable (V1, V2, V3, V4) in the upwind rotor region (200) or the at least one wind status variable (V1, V2, V3, V4) in the upwind rotor region is determined therefrom, and
- the wind model is derived from at least one relationship between the at least one detected wind measurement value (V5, V6, V7) in the wind measurement region (301) and the at least one wind status measurement value in the upwind rotor region.

7. Method according to any one of the preceding claims, **characterised in that**
- the at least one determined wind status variable (V1, V2, V3, V4) and/or
- the at least one detected wind measurement value (V5, V6, V7)
- are combined in each case with a position information item relating to a wind data set, and
- the wind data set is output for use outside the wind turbine (100), and/or **in that**
- from the at least one wind status variable (V1, V2, V3, V4) a power which can be produced by the wind turbine is determined and/or predicted.

8. Method for controlling a wind turbine (100), wherein the wind turbine (100) has a rotor (106) having a plurality of rotor blades (108) and the rotor blades (108) pass over a rotor face (304) when the rotor (106) rotates, comprising the steps of:
- detecting at least one wind measurement value (V5, V6, V7) in a wind measurement region (301), wherein
- the wind measurement region (301) is determined as a region above the rotor face (304),
- determining at least one wind status variable (V1, V2, V3, V4) in an upwind rotor region (302) in accordance with the at least one detected wind measurement value (v_{m,i}), wherein
- the upwind rotor region (302) is determined as a region in front of the rotor face (304), and
- controlling the wind turbine (100) in accordance with the at least one determined wind status variable (V1, V2, V3, V4) .

9. Method according to claim 8,
**characterised in that**
- from the at least one wind status variable (V1, V2, V3, V4) a power output which can be produced by the wind turbine (100) is determined, and
- the wind turbine (100) is operated in such a manner that it produces a reduced power output and the reduced power output is below the power output which can be produced by a predetermined reduction proportion.

10. Method according to claim 8 or 9,
**characterised in that**,
in accordance with the at least one wind measurement value (V5, V6, V7) and/or in accordance with the at least one wind status variable (V1, V2, V3, V4),
- local weather phenomena are detected, in particular the occurrence of a low level jet, and the control is adapted in accordance with this,
- a local wind loading is predicted and, depending on the predicted local wind loading, the control is updated in order to protect the wind turbine (100),
- a control power is provided in order to be able to support an electrical power supply network (120) into which the wind turbine (100) feeds, and/or
- a yield prediction is carried out or improved, in particular a yield prediction which is produced in accordance with a weather forecast is improved.

11. Method according to any one of claims 8 to 10, **characterised in that**,
- in accordance with the at least one determined wind status variable (V1, V2, V3, V4), a single blade adjustment is carried out, wherein each rotor blade of the wind turbine (100) is individually adjusted, in particular in order to take individually into account a local wind distribution which has been identified in the upwind rotor region (302).

12. Method according to any one of claims 8 to 11, **characterised in that**,
in order to detect the at least one wind status variable (V1, V2, V3, V4), a method according to any one of claims 1 to 7 is carried out.

13. Method for controlling a wind park (112) which has a plurality of wind turbines (100), wherein the wind turbines (100) in each case have a rotor (106) having a plurality of rotor blades (108) and the rotor blades (108) pass over a rotor face (304) when the rotor (106) rotates, comprising the steps of:
- detecting for at least two of the wind turbines (100), in particular for all of the wind turbines (100), in each case at least one wind measurement value (V5, V6, V7) in a wind measurement region (301), wherein
- the wind measurement region (301) is determined in each case as a region above the rotor face (304) of the relevant wind turbine (100), and
- establishing a wind distribution estimation which describes a wind distribution in the wind park, and
- controlling the wind park in accordance with the established wind distribution estimation, and/or in that, in order to detect at least one wind status variable (V1, V2, V3, V4) in each case in one, several or all of the wind turbines (100) of the wind park (112), a method according to any one of claims 1 to 7 is used.

14. Wind turbine (100) comprising
- a rotor (106) having a plurality of rotor blades (108), wherein the rotor blades (108) pass over a rotor face (304) when the rotor (106) rotates,
- a wind measurement device (103) for detecting at least one wind measurement value (V5, V6, V7) in a wind measurement region (301), wherein
- the wind measurement region (301) is determined as a region above the rotor face (304), and
- an evaluation device for determining at least one wind status variable (V1, V2, V3, V4) in an upwind rotor region (302) in accordance with the at least one detected wind measurement value (V5, V6, V7), wherein
- the upwind rotor region (302) is determined as a region in front of the rotor face (304), and/or in that
- the wind turbine (100) is provided to carry out a method for detecting at least one wind status variable (V1, V2, V3, V4) according to any one of claims 1 to 7, and/or
- the wind turbine is provided to carry out a method for controlling a wind turbine (100) according to any one of claims 8 to 12, wherein in particular a control device (101) is provided for this purpose.

15. Wind park (112) comprising a plurality of wind turbines, wherein
- at least one of the wind turbines (100) is constructed according to claim 14,
- the wind park (112) is provided to carry out a method according to claim 13, and/or
- the wind park (112) has a park control device (122) which is provided to carry out a method according to claim 13.

## Revendications

1. Procédé de détection d'au moins une grandeur d'état du vent (V1, V2, V3, V4) au moyen d'une éolienne (100),
dans lequel l'éolienne (100) présente un rotor avec plusieurs pales de rotor et les pales de rotor couvrent, lors de la rotation du rotor, une surface de rotor (304), comprenant les étapes suivantes :
- la détection au moins d'une valeur de mesure du vent (V5, V6, V7) dans une zone de mesure du vent (301), dans lequel
-- la zone de mesure du vent (310) est fixée comme une zone au-dessus de la surface de rotor (304), et
- la détermination au moins d'une grandeur d'état du vent (V1, V2, V3, V4) dans une zone au vent de rotor (302) en fonction d'au moins une valeur de mesure du vent (V5, V6, V7) détectée, dans lequel
-- la zone au vent de rotor (200) est fixée comme une zone en avant de la surface de rotor (R_{A}).

2. Procédé selon la revendication 1,
**caractérisé en ce que**
- pour la détection d'au moins une valeur de mesure du vent (V5, V6, V7), un dispositif de mesure du vent (103) est agencé sur l'éolienne (100), en particulier sur une nacelle (104) de l'éolienne (100), et
- le dispositif de mesure du vent (103) est conçu en particulier afin de réaliser indépendamment d'une rotation azimutale de l'éolienne (100) une mesure du vent fixe.

3. Procédé selon la revendication 1 ou 2, **caractérisé en ce que**
- une mesure du vent dirigée sensiblement verticalement vers le haut est réalisée pour la détection d'au moins une valeur de mesure du vent (V5, V6, V7).

4. Procédé selon l'une quelconque des revendications précédentes,
**caractérisé en ce que**
- la détection d'au moins une valeur de mesure du vent (V5, V6, V7) est réalisée avec une mesure du vent basée sur le laser, en particulier avec un dispositif de mesure (103) se basant sur le procédé LIDAR, et/ou
- avec un dispositif de mesure du vent (103) présentant une zone de mesure conique.

5. Procédé selon l'une quelconque des revendications précédentes,
**caractérisé en ce que**
- l'au moins une grandeur d'état du vent (V1, V2, V3, V4) est une grandeur d'état du vent de la liste présentant :
-- une vitesse du vent (V),
-- un sens du vent (WR),
-- une intensité de turbulence (TI),
-- un cisaillement du vent (α), en particulier un Wind-Shear et/ou un Wind-Veer, et
-- une rotation du vent (θ), et/ou que
- plusieurs valeurs de mesure du vent (V5, V6, V7) réparties localement dans la zone de mesure du vent (103) sont détectées et à partir de celles-ci
- plusieurs grandeurs d'état du vent (V1, V2, V3, V4) réparties localement dans la zone au vent de rotor (302),
- afin de déterminer à partir de celles-ci un champ du vent dans la zone au vent de rotor (302).

6. Procédé selon l'une quelconque des revendications précédentes,
**caractérisé en ce que**
- pour la détermination d'au moins une grandeur d'état du vent (V1, V2, V3, V4) dans la zone au vent de rotor (302)
-- un modèle de vent est utilisé, dans lequel
--- le modèle de vent décrit un rapport simplifié entre l'au moins une grandeur d'état du vent (V1, V2, V3, V4) et l'au moins une valeur de mesure du vent (V5, V6, V7) détectée, et
--- le modèle de vent émet, avec au moins une valeur de mesure du vent détectée comme grandeur d'entrée, au moins une grandeur d'estimation du vent comme grandeur de sortie ou grandeur d'état et
--- l'au moins une grandeur d'estimation du vent est utilisée comme l'au moins une grandeur d'état du vent (V1, V2, V3, V4), dans lequel en particulier
-- le modèle de vent est établi à partir de mesures de comparaison, pour lesquelles
--- outre la détection d'au moins une valeur de mesure du vent (V5, V6, V7) dans la zone de mesure du vent (301), au moins une valeur de mesure d'état du vent est mesurée dans la zone au vent de rotor, en particulier avec un dispositif de mesure externe à l'éolienne (100),
--- l'au moins une valeur de mesure d'état du vent dans la zone au vent de rotor (302) correspond à au moins une grandeur d'état du vent (V1, V2, V3, V4) dans la zone au vent de rotor (200), ou l'au moins une grandeur d'état du vent (V1, V2, V3, V4) dans la zone au vent de rotor est déterminée à partir de celle-ci, et
--- le modèle de vent est dérivé d'au moins un rapport entre l'au moins une valeur de mesure du vent (V5, V6, V7) détectée dans la zone de mesure du vent (301) et l'au moins une valeur de mesure d'état du vent dans la zone au vent de rotor.

7. Procédé selon l'une quelconque des revendications précédentes,
**caractérisé en ce que**
- l'au moins une grandeur d'état du vent (V1, V2, V3, V4) déterminée et/ou
- l'au moins une valeur de mesure du vent (V5, V6, V7) détectée
- sont combinées respectivement avec une information de position en un jeu de données du vent et
- le jeu de données du vent est émis pour l'utilisation en dehors de l'éolienne (100), et/ou que
- une puissance pouvant être générée par l'éolienne est déterminée et/ou pronostiquée à partir de l'au moins une grandeur d'état du vent (V1, V2, V3, V4) .

8. Procédé de commande d'une éolienne (100), dans lequel l'éolienne (100) présente un rotor (106) avec plusieurs pales de rotor (108) et les pales de rotor (108) couvrent, lors de la rotation du rotor (106), une surface de rotor (304), comprenant les étapes suivantes :
- la détection au moins d'une valeur de mesure du vent (V5, V6, V7) dans une zone de mesure du vent (301), dans lequel
-- la zone de mesure du vent (301) est fixée comme une zone au-dessus de la surface de rotor (304),
- la détermination au moins d'une grandeur d'état du vent (V1, V2, V3, V4) dans une zone au vent de rotor (302) en fonction d'au moins une valeur de mesure du vent (v_{m,i}) détectée, dans lequel
-- la zone au vent de rotor (302) est fixée comme une zone en avant de la surface de rotor (304), et
- la commande de l'éolienne (100) en fonction d'au moins une grandeur d'état du vent (V1, V2, V3, V4) déterminée.

9. Procédé selon la revendication 8,
**caractérisé en ce que**
- une puissance de sortie pouvant être générée par l'éolienne (100) est déterminée à partir de l'au moins une grandeur d'état du vent (V1, V2, V3, V4), et
- l'éolienne (100) fonctionne de sorte qu'elle génère une puissance de sortie réduite et la puissance de sortie réduite se situe d'une part de réduction prédéterminée en dessous de la puissance de sortie pouvant être générée.

10. Procédé selon la revendication 8 ou 9, **caractérisé en ce que**
en fonction d'au moins une valeur de mesure du vent (V5, V6, V7) et/ou en fonction d'au moins une grandeur d'état du vent (V1, V2, V3, V4)
- des phénomènes météorologiques locaux sont détectés, en particulier la survenue d'un jet à basse altitude, et en fonction de celui-ci la commande est adaptée
- une charge du vent locale est pronostiquée et, en fonction de la charge du vent locale pronostiquée, la commande est adaptée pour la protection de l'éolienne (100),
- une puissance de régulation est fournie afin de pouvoir soutenir un réseau d'alimentation (120) électrique que l'éolienne (100) alimente, et/ou
- un pronostic de rendement est réalisé ou amélioré, en particulier un pronostic de rendement établi en fonction d'une prévision météorologique est amélioré.

11. Procédé selon l'une quelconque des revendications 8 à 10,
**caractérisé en ce que**
- un réglage de pale individuel est réalisé en fonction d'au moins une grandeur d'état du vent (V1, V2, V3, V4) déterminée, pour lequel chaque pale de rotor de l'éolienne (100) est réglée individuellement, en particulier afin de tenir compte individuellement d'une répartition du vent locale reconnue dans la zone au vent de rotor (302).

12. Procédé selon l'une quelconque des revendications 8 à 11,
**caractérisé en ce que**
un procédé selon l'une quelconque des revendications 1 à 7 est réalisé pour la détection d'au moins une grandeur d'état du vent (V1, V2, V3, V4).

13. Procédé de commande d'un parc éolien (112) présentant plusieurs éoliennes (100), dans lequel les éoliennes (100) présentent respectivement un rotor (106) avec plusieurs pales de rotor (108) et les pales de rotor (108) couvrent, lors de la rotation du rotor (106), une surface de rotor (304),
comprenant les étapes suivantes :
- la détection pour au moins deux des éoliennes (100), en particulier pour toutes les éoliennes (100), respectivement au moins d'une valeur de mesure du vent (V5, V6, V7ᵢ) dans une zone de mesure du vent (301), dans lequel
-- la zone de mesure du vent (301) est fixée respectivement comme une zone au-dessus de la surface du rotor (304) de l'éolienne (100) concernée, et
- le calcul d'une estimation de répartition du vent qui décrit une répartition du vent dans le parc éolien, et
-- la commande du parc éolien en fonction de l'estimation de répartition du vent calculée, et/ou que un procédé selon l'une quelconque des revendications 1 à 7 est utilisé pour la détection au moins d'une grandeur d'état du vent (V1, V2, V3, V4) respectivement au niveau d'une ou plusieurs ou toutes les éoliennes (100) du parc éolien (112).

14. Eolienne (100) comprenant
- un rotor (106) avec plusieurs pales de rotor (108), dans laquelle les pales de rotor (108) couvrent, lors de la rotation du rotor (106), une surface de rotor (304),
- un dispositif de mesure du vent (103) pour la détection d'au moins une valeur de mesure du vent (V5, V6, V7) dans une zone de mesure du vent (301), dans laquelle
-- la zone de mesure du vent (301) est fixée comme une zone au-dessus de la surface de rotor (304), et
- un dispositif d'évaluation pour la détermination au moins d'une grandeur d'état du vent (V1, V2, V3, V4) dans une zone au vent de rotor (302) en fonction d'au moins une valeur de mesure du vent (V5, V6, V7) détectée, dans laquelle
-- la zone au vent du rotor (302) est fixée comme une zone en avant de la surface de rotor (304) et/ou que
- l'éolienne (100) est préparée afin de réaliser un procédé de détection d'au moins une grandeur d'état du vent (V1, V2, V3, V4) selon l'une quelconque des revendications 1 à 7, et/ou
- l'éolienne est préparée afin de réaliser un procédé de commande d'une éolienne (100) selon l'une quelconque des revendications 8 à 12, dans laquelle en particulier un dispositif de commande (101) est prévu à cet effet.

15. Parc éolien (112) comprenant plusieurs éoliennes, dans lequel
- au moins une des éoliennes (100) est réalisée selon la revendication 14,
- le parc éolien (112) est préparé afin d'effectuer un procédé selon la revendication 13, et/ou
- le parc éolien (112) présente un dispositif de commande de parc (122) qui est préparé afin d'effectuer un procédé selon la revendication 13.
